# EUROPEAN PATENT SPECIFICATION

(11) **EP 4 452 549 B1**
(45) Date of publication and mention of the grant of the patent: **15.04.2026**
(21) Application number: 22838875.7
(22) Date of filing: 22.12.2022
(51) Int. Cl.: B23K 26/38, G05B 19/418

(54) **APPARATUS AND METHOD FOR CUTTING AND REMOVING PARTS**
VORRICHTUNG UND VERFAHREN ZUM SCHNEIDEN UND ENTFERNEN VON TEILEN
DISPOSITIF ET PROCÉDÉ DE DÉCOUPE ET DE RETRAIT DE PIÈCES

(30) Priority: 22.12.2021 EP 21217044
(43) Date of publication of application: 30.10.2024
(73) Proprietor: Bystronic Laser AG, 3362 Niederönz (CH)
(72) Inventor: HAAS, Titus, 4800 Zofingen (CH); JACOBI, Stefan, 59597 Bad Westernkotten (DE); FAHRNI, Christoph, 3363 Oberönz (CH)
(74) Representative: Patentanwälte Geyer, Fehners & Partner mbB
(86) International application number: PCT/EP2022/087552
(87) International publication number: WO 2023/118470

(56) References cited:
- WO-A1-2020/244778
- DE-A1- 102019 130 154

## Description

The invention relates to an apparatus for cutting parts from a workpiece according to a cutting plan and for removing the cut parts from a remainder of the workpiece, to a method for cutting parts from a workpiece according to a cutting plan and for removing the cut parts from a remainder of the workpiece, and to a computer program product.

Known cutting systems, such as laser cutting systems, can be equipped with devices with which parts of a workpiece support which are cut from a workpiece, for example a metal sheet, are removed from the remainder of the workpiece and loaded onto pallets. The parts can be sorted in the process. The parts are typically cut with predetermined cutting contours according to a cutting plan, for example the parts are cut in a nested manner from the workpiece so as to save material. However, after a cutting operation, there may be parts with a removal complication on the workpiece support, i.e. cut parts which cannot be removed from the remainder of the workpiece due to a removal complication. For example, a part may be incompletely cut and adhere non-releasably to the remainder of the workpiece. The part may also adhere to the workpiece support such that it cannot be removed. The part may be tilted in such a way that a gripper of a removal device cannot grip the part. The part may be arranged below the remainder of the workpiece and therefore not be removed. The part may have fallen between the rest elements of the workpiece support and therefore not be reachable by the gripper. Furthermore, the part may be contaminated in a contact region of the workpiece intended for the gripper, such that gripping of the workpiece is prevented, for example in the case of magnetic grippers. With some removal devices, the basic removability and/or sortability of a cut part can be determined by means of a pressure measurement, for example by generating a negative pressure on the cut part. WO2020/244778 A1 discloses a sorting system for sorting processed parts from a workpiece, which has been processed by a laser processing machine, in particular a laser sheet processing machine, having: A working table for supporting the workpiece with the processed parts and a fleet of interacting legged mobile robots for sorting the processed parts in a collaborative manner to a target destination. In DE102019130154 A1 a method for visually supporting a hand-guided handling process, in particular a sorting process, of workpieces is disclosed.

The object is to provide an apparatus and a method for cutting parts according to a cutting plan from a workpiece and for removing the cut parts from a remainder of the workpiece which enable removal of cut parts with a removal complication.

This object is achieved by a laser cutting apparatus for cutting parts from a workpiece according to a cutting plan and removing the cut parts from a remainder of the workpiece according to claim 1, a method for cutting parts from a workpiece according to a cutting plan and removing the cut parts from a remainder of the workpiece according to claim 9 and a computer program product according to claim 15.

In the method, parts are cut from a workpiece according to a cutting plan. The method enables improved removal, in particular improved sorting, of the cut parts. The cutting can be done with a cutting tool, e.g. a laser beam. The workpiece can be a metal sheet and the parts can be metal parts. In embodiments, the removing of cut parts is performed by the removal device, e.g. a technical device having a gripping arm, an actuator driving the gripping arm, and/or a control unit. In embodiments, the removing can exclusively be performed by the removal device. In further embodiments, at least one of the steps of the method can be controlled by a control device. At least one of the steps of the method can be carried out automatically. In embodiments, the method can be performed entirely automatically. It is not only possible to remove parts that are free of a removal complication, i.e. the parts are without a removal complication, and/or that correspond in particular to the cutting plan. Parts can also be removed that have a removal complication and cannot be removed in the same way as parts without a removal complication, for example due to their position, orientation, cleanness, detachability from a workpiece support and/or their cutting condition, and/or in particular do not correspond to the cutting plan. At least one part may have one or more removal complications. One or more complication classes can be assigned to at least one part. Furthermore, the removal and/or sorting of the parts can be monitored, for example be remotely controlled by means of remote monitoring. The method can be optimised with the information obtained during the process about the parts with a removal complication. For example, the information can be used for repeated cutting. Furthermore, the information can be used to improve a sorting strategy and/or one or more sorting specifications, e.g. contact position on the part for the removal device, e.g. using machine learning. With the information obtained, a nesting method for the cutting plan can be optimised. Furthermore, on the basis of the information obtained, in the case of complex removal complications and/or in the case of a combination of several removal complications, controlled and/or regulated gripping of the cut parts with the removal device can be realised. One or more steps of the method and its variations can be implemented as one or more smart procedures. These advantages can be used, for example, within the framework of smart production (smart factory), in particular a production environment that is at least partially self-organising.

According to alternative approaches, the step of identifying may include identifying the cut parts which are free of a removal complication on the basis of the sensor data. Furthermore, the step of classifying may include classifying the identified parts which are free of a removal complication according to the predetermined removal complication classification. The step of removing the cut parts which are free of a removal complication may include removing the classified parts which are free of a removal complication.

In the method, the removal complication classification may include at least one of the following complication classes selected from:
- part that is incompletely cut;
- part adhering to a workpiece support;
- part which is arranged at an angle of inclination deviating from the cutting plan;
- part which is arranged in a position deviating from the cutting plan on a removal collision course to the remainder of the workpiece;
- part which is arranged in a position deviating from the cutting plan, beyond reach or within reach of the removal device;
- part which has workpiece waste material and/or a contamination in a contact region of the part provided for the removal device; and
- part which is free of a removal complication.

In the method, the at least one handling step can be selected from:
- re-cutting a classified part that is incompletely cut;
- refraining from removing a classified part which is incompletely cut and/or adhering to a workpiece support, outputting removal complication information and/or scheduling the cutting of a corresponding part;
- removing a classified part which is disposed at an angle of inclination deviating from the cutting plan using the removal device, with a gripping unit, in particular a gripping arm, of the removal device being angularly adjusted on the basis of the sensor data to compensate for the angle of inclination;
- removing a classified part which is disposed in a position deviating from the cutting plan on a removal collision course to the remainder of the workpiece by means of the removal device, with the removal device being controlled on the basis of the sensor data in order to avoid the collision course;
- refraining from removing a classified part that is disposed in a position deviating from the cutting plan beyond reach of the removal device, outputting removal complication information and/or scheduling the cutting of a corresponding part;
- locating a classified part which is disposed in a position deviating from the cutting plan within reach of the removal device and removing the classified part by means of the removal device;
- locating workpiece waste material and/or a contamination present in a contact region of a classified part provided for the removal device on the basis of the sensor data, removing the workpiece waste material and/or contamination by means of a cleaning device on the basis of the sensor data and removing the classified part by means of the removal device; and
- locating a workpiece waste material and/or a contamination present in a contact region of a classified part provided for the removal device on the basis of the sensor data, contacting the classified part by means of the removal device outside the contact region on the basis of the sensor data and removing the classified part by means of the removal device.

The method may include removing the cut parts which are free of a removal complication, and/or handling the classified parts with at least one removal complication, and/or removing the classified parts with at least one removal complication, and/or removing the classified parts which are free of a removal complication, and sorting of the parts, in particular sorting according to shape similarity. At least one sorting parameter can be used, which is contained in the cutting plan and/or is stored in the control device and/or in a memory unit, for example. Furthermore, the detection of the parts in the remainder of the workpiece can include an optical detection, in particular a one-, two- and/or three-dimensional detection. Furthermore, the sensor data can contain one-, two- and/or three-dimensional information and/or data.

In the method, the sensor device can have at least one optical sensor. The sensor device can be stationary or mobile. The position of the sensor device can be changed during the process. The sensor device can have at least one camera, which is arranged at at least two different recording positions, or at least two cameras, which are arranged at different positions. In this way, three-dimensional stereo vision can be realised.

In all of the embodiments, a calibration of the sensor device can be carried out for an interaction of the sensor device with the control device of the apparatus with which the method is carried out and/or with a control unit of the removal device. A corresponding calibration module can be provided in the control device and/or control unit. During the calibration, sensor data, for example images, from points at at least four known positions in a coordinate system of the apparatus with which the method is carried out can be captured and processed. A Harris corner, for example, is suitable as a calibration point.

It is possible for measuring points to be defined along a cutting contour of a cut part and monitored with respect to brightness and/or colour values. All, a plurality of or only individual regions of a cutting contour, such as only one of two opposite sides, can be provided with measuring points. The sensor data can be analysed to determine grey regions and/or colour values along the cutting contour of the part and/or the removal complication can be estimated using a neural network, in particular based on the grey regions. This can be done in the step of identifying cut parts with at least one removal complication on the basis of the sensor data. For example, to identify a part that is arranged at an angle of inclination that deviates from the cutting plan, a "colour along edge" algorithm can compare opposite grey regions inside and outside the cutting contour, with the grey regions being captured using two two-dimensionally imaging cameras arranged at different positions. If the differences are minimal, the cut part is not tilted and is arranged at an angle of inclination corresponding to the cutting plan. Otherwise, the same grey regions captured by both cameras are processed in order to use a neural network to predict and decide whether the cut part is tilted or arranged at an angle of inclination corresponding to the cutting plan. For pre-processing of the captured grey regions, the algorithm can use histograms (tables) in which the difference values of the grey regions are cumulated. The relevant information about the condition of the part can thus be taken directly from the table and does not have to be determined individually for each part. Thus, the same neural network can be used for all cut parts. In addition, a vision library with a pattern comparison algorithm can be used to remove the cut parts which have three-dimensional positions to be determined.

Estimating the removal complication may include accessing at least one trained neural network with at least one of the pre-processed grey regions to calculate a result for estimating the removal complication. The pre-processing can include optimising grey regions and/or extracting specific grey regions along the cutting contour. During the training of the neural network, those features of the sensor data and the grey regions that are to be taken into account for the estimation of the removal complication and for the calculation of the result can be determined automatically. The neural network can be a computer-implemented and machine neural network, for example a deep neural network (DNN) in the form of a convolutional neural network (CNN). At least one removal complication can thus be determined using artificial intelligence and/or machine learning. In this way, for example, cut parts arranged at an angle of inclination deviating from the cutting plan can be identified.

The sensor device can have at least one TOF (time-of-flight) camera, with which depth information about the parts is obtained. The principle of the TOF camera, which determines the depth information using a time-of-flight method, has the advantage that an entire region of the workpiece is recorded at once and does not have to be scanned.

The sensor device can also have at least one light field camera, with which depth information about the parts can be obtained. The sensor device can have at least one pattern projector. The sensor device can also have at least one lidar (light detection and ranging) system. A typical lidar sensor is based on the time-of-flight method. It emits pulsed light waves into the environment, which are reflected by the workpiece and return to the detector of the sensor. The time it takes for each pulse to return is used to calculate the distance travelled. The sensor device can also have at least one ultrasonic sensor, which emits an ultrasonic pulse, which is reflected by surrounding objects and captured using a plurality, for example an array, of microphones. Depth information about the cut parts can be obtained with the above configurations of the sensor device.

In the method, data on the handling steps performed can be captured. To avoid removal complications, at least one element selected from at least one cutting parameter, in particular at least one cutting parameter that adjusts the width of a cutting gap, at least one removal parameter, at least one removal strategy, at least one sorting parameter and at least one sorting strategy can be adjusted using the data on the handling steps performed. For example, the cutting parameters for the automation of the method and the sorting of the parts can be optimised, e.g. parameters that lead to a wider cutting gap, which simplifies automation. To avoid removal complications, the cutting plan, e.g. the position of the parts, can be adjusted using the data on the handling steps performed. In the method, the adjusted parameters and/or the adjusted strategies can be used in a step for regulating the cutting of the parts, the removal of the parts and/or the sorting of the parts.

In the method, the removal can be monitored with the sensor device. During the method and/or in a final method step, a workpiece support can be detected and/or checked by means of the sensor device. In the case of wear of the workpiece support, wear information can be output, with the wear information indicating in particular which elements of the workpiece support have to be replaced and when. In the event of contamination of the workpiece support, cleaning of same can be scheduled. Contamination may include workpiece waste material and/or contamination, typically dross generated during cutting.

A further embodiment relates to an apparatus for cutting, in particular laser-cutting, parts from a workpiece according to a cutting plan and for removing the cut parts from a remainder of the workpiece, in particular with a method according to any one of the preceding embodiments and variations thereof, including a workpiece support, a sensor device for detecting the cut parts in the remainder of the workpiece, a removal device for removing the parts and a control device. The control device comprises:
- a sensor module for controlling the sensor device and for providing sensor data on the detected cut parts;
- a comparison module for comparing the sensor data with the cutting plan;
- an identification module for identifying cut parts with at least one removal complication on the basis of the sensor data;
- a classification module for classifying the identified parts according to a predetermined removal complication classification and for assigning at least one complication class to each identified part;
- a removal module for controlling the removal device for removing cut parts which are free of a removal complication and classified parts; and
- a handling module for controlling a handling of the classified parts with at least one removal complication according to at least one handling step assigned to the complication class.

The apparatus may include a device for providing a cutting tool, e.g. a laser source for generating a laser beam. The identification module may be designed to identify cut parts which are free of a removal complication on the basis of the sensor data. Furthermore, the classification module may be designed to classify the identified parts which are free of a removal complication according to the predetermined removal complication classification. The removal module may be designed to control the removal device to remove the classified parts which are free of a removal complication.

The removal complication classification can include at least one of the following complication classes, selected from:
- part that is incompletely cut;
- part adhering to the workpiece support;
- part which is arranged at an angle of inclination deviating from the cutting plan;
- part which is arranged in a position deviating from the cutting plan on a removal collision course to the remainder of the workpiece;
- part which is arranged in a position deviating from the cutting plan, beyond reach or within reach of the removal device;
- part which has workpiece waste material and/or a contamination in a contact region of the part provided for the removal device; and
- part which is free of a removal complication.

The apparatus for cutting parts from a workpiece according to a cutting plan and for removing the cut parts from a remainder of the workpiece can have an information output unit and/or a cleaning device.

The at least one handling step can be selected from:
- re-cutting a classified part that is incompletely cut;
- refraining from removing a classified part which is incompletely cut and/or adhering to the workpiece support, outputting removal complication information to the information output unit and/or scheduling the cutting of a corresponding part;
- removing a classified part which is disposed at an angle of inclination deviating from the cutting plan using the removal device, with a gripping unit, in particular a gripping arm, of the removal device being angularly adjusted on the basis of the sensor data to compensate for the angle of inclination;
- removing a classified part which is disposed in a position deviating from the cutting plan on a removal collision course to the remainder of the workpiece by means of the removal device, with the removal device being controlled on the basis of the sensor data in order to avoid the collision course;
- refraining from removing a classified part that is disposed in a position deviating from the cutting plan beyond reach or the reach of the removal device, outputting removal complication information to the information output unit and/or scheduling the cutting of a corresponding part;
- locating a classified part which is disposed in a position deviating from the cutting plan within reach of the removal device and removing the classified part by means of the removal device;
- locating workpiece waste material and/or a contamination present in a contact region of a classified part provided for the removal device on the basis of the sensor data, removing the workpiece waste material and/or the contamination by means of the cleaning device on the basis of the sensor data and removing the classified part by means of the removal device; and
- locating a workpiece waste material and/or a contamination present in a contact region of a classified part provided for the removal device on the basis of the sensor data, contacting the classified part by means of the removal device outside the contact region on the basis of the sensor data and removing the classified part by means of the removal device.

The apparatus for cutting parts from a workpiece according to a cutting plan and for removing the cut parts from a remainder of the workpiece can be designed for sorting the parts, in particular for sorting the parts according to shape similarity. For example, the apparatus can be designed as an automatic sorting apparatus. The control device and/or the removal device can be designed, in the case of the removal of the cut parts which are free of a removal complication and/or the handling of the classified parts with at least one removal complication and/or the removal of the classified parts with at least one removal complication and/or the removal of the classified parts free of a removal complication, to initiate and/or to carry out sorting of the parts, in particular sorting according to shape similarity.

The apparatus for cutting parts according to a cutting plan from a workpiece and for removing the cut parts from a remainder of the workpiece, in particular the comparison module, the identification module, the classification module, the removal module and/or the handling module, can be designed in such a way that the removal of the parts which are free of a removal complication, and/or the handling of the classified parts and/or the removal of the classified parts includes sorting the parts, in particular sorting according to the shape similarity. The apparatus and/or at least one of its modules can be designed to use at least one sorting parameter that is contained in the cutting plan, for example, and/or is stored in the control device and/or in a memory unit of the device. For example, the comparison module can be designed to apply at least one sorting parameter, e.g. a shape similarity of several parts, during the comparison. Furthermore, the identification module can be designed to use at least one sorting parameter, e.g. shape similarity of several parts, during identification. Furthermore, the detection of the parts in the remainder of the workpiece can include an optical detection, in particular a one-, two- and/or three-dimensional detection. In addition, the sensor data can contain one-, two- and/or three-dimensional information and/or data.

In the apparatus for cutting parts from a workpiece according to a cutting plan and for removing the cut parts from a remainder of the workpiece, the sensor device can have at least one optical sensor. The optical sensor can be designed to provide one-, two-, and/or three-dimensional sensor data. The sensor device can be stationary or mobile. The sensor device can have at least one camera that can be arranged at at least two different recording positions, or at least two cameras that are arranged at different positions.

The control device may include an assessment module which is designed to analyse sensor data to determine grey regions around sides of the part and/or which has a neural network for estimating the removal complication, particularly on the basis of the grey regions. This can be, for example, sensor data from a plurality of two-dimensional imaging cameras, with which images with grey regions are generated. The assessment module can be included in the identification module. Estimating the removal complication may include accessing at least one trained neural network with at least one of the determined grey regions to calculate a result for estimating the removal complication. During the training of the neural network, those features of the sensor data and the grey regions that are to be taken into account for the estimation of the removal complication and for the calculation of the result can be determined automatically. The neural network can be a computer-implemented and machine neural network, for example a deep neural network (DNN) in the form of a convolutional neural network (CNN). At least one removal complication can thus be determined using artificial intelligence and/or machine learning. In this way, for example, cut parts arranged at an angle of inclination deviating from the cutting plan can be identified.

The sensor device can have at least one TOF camera, which is designed to obtain depth information about the parts. The sensor device can have at least one light field camera which is designed to obtain depth information about the parts. The sensor device can have at least one pattern projector. The sensor device can have at least one lidar system. The sensor device can also have at least one ultrasonic sensor, which is designed to receive sensor data.

The control device can have a memory unit in which at least one element is stored which is selected from the cutting plan, the sensor data, the removal complication classification, the complication classes, the at least one handling step, at least one cutting parameter, at least one removal parameter, at least one removal strategy, at least one sorting parameter and at least a sorting strategy. The handling module and/or the sensor module can be designed to capture and/or provide data about the handling steps that have been carried out. The control device can be designed as a computer or include one.

The control device may include at least one element selected from:
- a control module that is designed to avoid removal complications by using the data on the handling steps performed to adjust at least one element selected from the cutting parameter, in particular at least one cutting parameter that adjusts the width of a cutting gap, the removal parameter, the removal strategy, the sorting parameter and the sorting strategy; and
- a nesting module, which is designed to define the cutting plan and to adjust the cutting plan to avoid removal complications by using the data on the handling steps performed.
The control module can also be designed to control the cutting of the parts, the removal of the parts and/or the sorting of the parts, in particular using the adjusted parameters and/or the adjusted strategies.

The control device may include at least one element selected from:
- a monitoring module for monitoring the removal of the parts by means of the sensor device; and
- a checking module for checking the workpiece support by means of the sensor device during the method and/or in a final method step, and/or for outputting wear information to the information output unit and/or to the control device in the case of wear of the workpiece support, with the wear information in particular indicating which elements of the workpiece support have to be replaced and when, and/or for scheduling cleaning of the workpiece support in the event of contamination thereof.

In embodiments and variations thereof, the removal device can have at least one gripping unit, in particular at least one magnetic gripping arm, at least one suction gripping arm or at least one clamping gripping arm. The magnetic gripping arm can be used to remove magnetic metal parts. The gripping unit of the removal device can be angularly adjustable. The removal module can be designed to control the gripping unit of the removal device on the basis of the sensor data, to adjust an angle of inclination of a classified part that deviates from the cutting plan in a compensating manner.

The embodiments and variations of the apparatus for cutting parts according to a cutting plan from a workpiece and for removing the cut parts from a remainder of the workpiece can be used in the embodiments and modifications of the method for cutting parts according to a cutting plan from a workpiece and for removing the cut parts from a remainder of the workpiece. With the above embodiments of the apparatus for cutting parts according to a cutting plan from a workpiece and for removing the cut parts from a remainder of the workpiece, the same advantages and functions can be realised as with the embodiments of the method for cutting parts according to a cutting plan from a workpiece and for removing the cut parts from a remainder of the workpiece, in particular with identical and/or analogous features.

A further embodiment relates to a computer program product, comprising one or more program modules that cause the apparatus according to any one of the preceding embodiments and variations to carry out the steps of the method according to any one of the preceding embodiments and variations, in particular when the program modules are loaded into a memory unit of the apparatus. The program modules can contain modules of the apparatus according to the above embodiments and variations, in particular the sensor module, the comparison module, the identification module, the classification module, the removal module, the handling module, the assessment module, the control module, the checking module and/or the monitoring module.

Another embodiment relates to a use of the apparatus for cutting according to any one of the preceding embodiments and variations in the method for cutting according to any one of the preceding embodiments and variations. In the above one embodiment of the method for cutting and in the preceding embodiments and variations of the method for cutting, the method is performed by the apparatus for cutting according to any one of the preceding embodiments and variations. In embodiments of the method the control device can comprise at least one of the modules of the apparatus according to the above embodiments and variations, in particular the sensor module, the comparison module, the identification module, the classification module, the removal module and/or the handling module. In addition, the assessment module, the control module, the checking module and/or the monitoring module of embodiments of the apparatus can be included in the control device of the method.

Further features and expediencies arise from the following description of exemplary embodiments, the drawings and the dependent claims.

The invention is explained in more detail below on the basis of exemplary embodiments with reference to the accompanying drawings, which likewise disclose features that are essential to the invention.

To avoid repetition, elements that are the same or that correspond to one another are denoted by the same reference signs in different figures and are not explained more than once. In the drawings:
- Figures 1a to 1c: schematically show a first example according to embodiments, wherein figure 1a shows a method for cutting and removing parts according to the first example, figure 1b shows an apparatus 100 of the first example and figure 1c shows a control device 120 of the apparatus 100;
- Figures 2a and 2b: schematically show an example of a complication class P1 in plan view and in a lateral cross-sectional view;
- Figure 3: schematically shows an example of a complication class P2 of the cut part 12 in a lateral cross-sectional view;
- Figures 4, 5a to 5d: schematically show examples of a complication class P3 in lateral cross-sectional views;
- Figures 6a and 6b: schematically show an example of a complication class P4 in plan view and in lateral cross-sectional views;
- Figure 7: schematically shows an example of a complication class P5 in a lateral cross-sectional view;
- Figures 8a to 8c: schematically show examples of a complication class P6 in lateral cross-sectional views and in plan views;
- Figure 9: schematically shows an example of step SB of the first example with the identification module 123;
- Figures 10 to 12: schematically show examples for a sensor device 112 of the apparatus 100;
- Figures 13: schematically shows additional steps SFX with X = 0 to 7 of the method according to further examples;
- Figure 14: schematically shows the control device 120 of the further examples; and
- Figure 15: schematically shows a method for cutting and removing parts according to a second example.

In embodiments and examples, a cut part is also referred to as a "part". Furthermore, the term "parts which are free of a removal complication" means parts that do not have a removal complication and/or are easily sortable and therefore are suitable for a standard removal procedure in which no removal complication is taken into account. The same applies to grammatical variations of the terms mentioned. The term "grey region" can also be called brightness, pixel value, colour intensity, colour value or grey value.

In embodiments and examples, one or more steps of the method can be implemented as one or more smart procedures. Smart rules can be used for this. The apparatus according to embodiments and examples can be configured accordingly. This can be done, for example, within the framework of smart production (smart factory), in particular a production environment that is at least partially self-organising. The term "smart" can be understood in this context as autonomous adjustment of production using artificial intelligence and machine learning approaches.

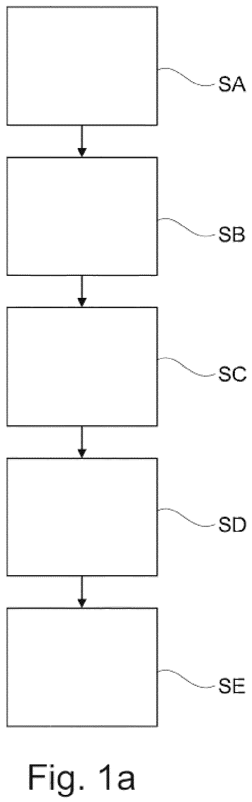

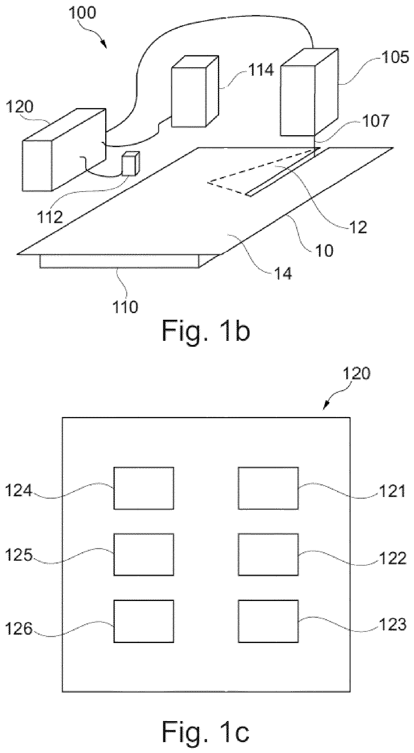

Figures 1a to 1c schematically illustrate a first example according to embodiments. The first example relates to an apparatus for cutting and removing parts, which is shown schematically as a laser cutting apparatus 100 in figure 1b. The laser cutting apparatus 100 is designed to cut parts 12 from a workpiece 10 according to a cutting plan, with a remainder of the workpiece 14 remaining, and to remove the cut parts 12 from the remainder of the workpiece 14. In the present example, the workpiece 10 is a metal sheet, for example made of stainless steel. One of the parts 12 to be produced is shown already cut on one side in figure 1b, while the dashed lines represent the outlines of the part 12 that are still to be cut according to the cutting plan. The laser cutting apparatus 100 has a workpiece support 110 for workpiece 10, a sensor device 112 for detecting the cut parts 12 in the remainder of the workpiece 14, a removal device 114 for removing the cut parts 12 from the remainder of the workpiece 14, and a control device 120. In the present example, the workpiece support 110 is designed as a grid with a large number of rest elements for the workpiece 10.

As shown schematically in figure 1c, the control device 120 has the following modules:
- a sensor module 121 for controlling the sensor device and for providing sensor data on the detected cut parts,
- a comparison module 122 for comparing the sensor data with the cutting plan;
- an identification module 123 for identifying cut parts with at least one removal complication on the basis of the sensor data;
- a classification module 124 for classifying the identified parts according to a predetermined removal complication classification and for assigning at least one complication class with each identified part;
- a removal module 125 for controlling the removal device for removing cut parts which are free of a removal complication and classified parts; and
- a handling module 126 for controlling a handling of the classified parts with at least one removal complication according to at least one handling step assigned to the complication class.

In the present example, the laser cutting apparatus 100 has a cutting head 105 as a device for providing a cutting tool , which cutting head is connected to a laser source (not shown) for generating a laser beam 107 with a power of 1 kW or more and a wavelength in the range from 700 nm to 2 µm. The cutting head 105 can be used to direct the laser beam 107 in the form of a cutting tool onto the workpiece 10. The cutting head 105 and thus the laser beam 107 can be moved over the workpiece 10 in the cutting direction. The control device 120 is connected in a wire-bound manner to the cutting head 105, the sensor device 112 and the removal device 114 for data communication. The data line can also take place via fibre optics or wirelessly, for example by radio. In the present case, the sensor device 112 contains two stationary cameras which are arranged at different positions and with which two-dimensional sensor data about the cut parts 12 are obtained from two different lateral observation angles.

In a further variation of the first example, a calibration module (not shown) is contained in the control device 120 and/or in the control unit of the removal device 114. During the calibration, sensor data, for example images, from points at at least four known positions in a coordinate system of the laser cutting apparatus 100 or the removal device 114 are captured and processed. This promotes the detection of the cut parts 12 and other objects and the handling and removal of the parts 12.

Figure 1a shows schematically the method for cutting and removing parts of the first example. With the laser cutting apparatus 100, the parts 12 are cut according to the cutting plan along a predetermined cutting contour. In a step SA of the method, the sensor device 112 detects the cut parts 12 in the remainder of the workpiece 14, sensor data about the detected cut parts 12 are provided and the sensor data are compared with the cutting plan. The cut parts 12 that have at least one removal complication are identified in a step SB using the sensor data. The identified parts 12 are classified in a step SC according to a predetermined removal complication classification. At least one complication class is assigned to each identified part 12. In a step SD, cut parts which are free of a removal complication are removed by means of the removal device 114. In a step SE, the classified parts are handled with at least one removal complication according to at least one handling step assigned to the complication class. Smart rules can be used for this.

Steps SD and SE shown in figure 1a are carried out according to the chronological order of production of the parts which are free of a removal complication and the parts with at least one removal complication. If there are parts 12 which are free of a removal complication and parts 12 with at least one removal complication at the same time, steps SD and SE can be carried out at least partially simultaneously.

In a variation of the first example, in step SB the cut parts 12 which are free of a removal complication are also identified on the basis of the sensor data. The identification module 123 is therefore configured to identify cut parts which are free of a removal complication on the basis of the sensor data. In the classification step SC, the identified parts 12 which are free of a removal complication are also classified according to the predetermined removal complication classification and are each assigned a complication class P0 "part which is free of a removal complication". For this purpose, the classification module 124 is designed to classify the identified parts 12 which are free of a removal complication according to the predetermined removal complication classification. The classified parts which are free of a removal complication are removed in step SD. To this end, the removal module 125 is configured to control the removal device 114 for removal of the classified parts 12 which are free of a removal complication. In a further variation of the first example, all parts 12 that are not assigned to any other complication class can be assigned to the complication class P0.

The removal complication classification includes at least two complication classes P0 to P6 and is stored in the control device 120 and/or in the classification module 124, e.g. in a memory unit (not shown) of same. Smart rules can be assigned to one or more complication classes.

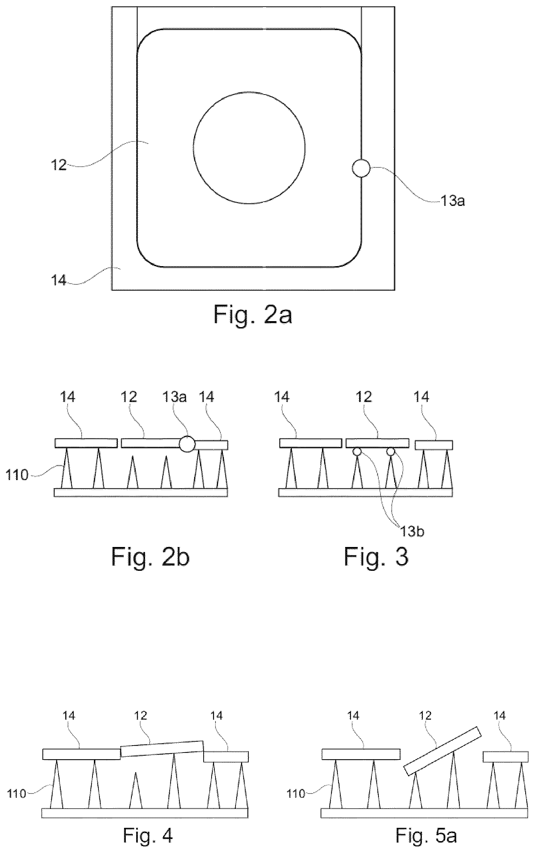

As an example of a complication class P1, figure 2a schematically shows a cut part 12 with a remainder of the workpiece 14 in a plan view. Figure 2b schematically shows the cut part 12 and the remainder of the workpiece 14 resting on the rest elements of the workpiece support 110 in a lateral cross-sectional view. After cutting, there is a connection point 13a between the workpiece 12 and the remainder of the workpiece 14, which is detected by the sensor device 112 in step SA. In step SB of the method, the part 12 is therefore identified as having a removal complication on the basis of the sensor data of the sensor device 112. In step SC, a complication class P1 of the removal complication classification "part which is incompletely cut" is determined for the part 12. The classified, incompletely cut part 12 is handled with a handling step SE assigned to its complication class. In a handling step, the incompletely cut part is cut again at the connection point 13a, after which the part 12 is removed. In an alternative handling step, the classified part 12 which is incompletely cut is not removed; removal complication information is output, for example in the form of an acoustic signal; and cutting of a part corresponding to the incompletely cut part 12 is scheduled for the further course of the method. In this case, the incompletely cut part 12 remains on the remainder of the workpiece 14 and is disposed of therewith.

Figure 3 illustrates an example of a complication class P2 of the cut part 12 schematically in a lateral cross-sectional view. In the case of this removal complication, the part 12 adheres to the workpiece support 110 because of the weld joints 13b that have arisen undesirably during laser cutting, and therefore cannot be removed by means of the removal device 114. In this case too, the classified part 12 is not removed in the handling step SE; removal complication information is output, for example in the form of an acoustic signal; and cutting of a part corresponding to the part 12 adhering to the workpiece support is scheduled for the further course of the method. In addition, cleaning of the work base 110 can be scheduled to remove the adhered part 12, or the workpiece support can be replaced.

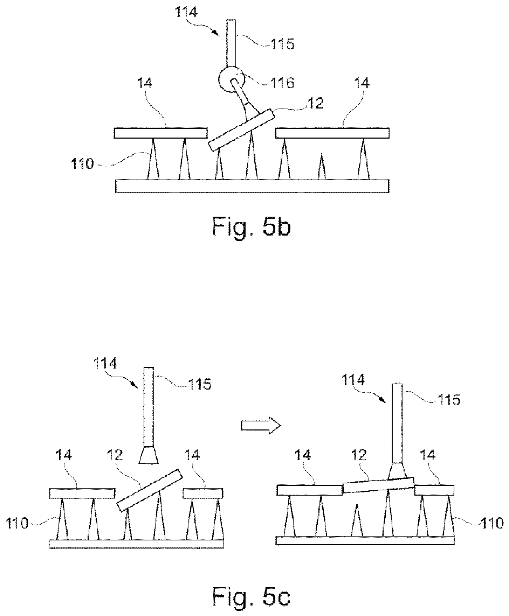

Figures 4, 5a and 5b illustrate examples of a complication class P3, "part which is disposed at an angle of inclination deviating from the cutting plan", schematically in lateral cross-sectional views. In the removal complication shown in figure 4, the part 12 is inclined at a small angle with respect to the workpiece support 110, in deviation from the cutting plan. In the case of the removal complication of the part 12 shown in figure 5a, an angle of inclination that deviates significantly from the cutting plan is assumed. The removal device 114 has a gripping unit with a gripping arm 115 in the form of a suction gripping arm, which has a joint 116 and can be angularly adjusted at said joint. Alternatively, the gripping arm 115 may be designed as a magnetic gripping arm with a joint 116 if the part 12 includes a metal with magnetic properties. The gripping arm 115 can also be rotatable about its longitudinal axis. In step SE of the method, after the small angle of inclination of the part 12 has been determined as in figure 4, an optimal contact position for gripping the inclined part 12 is determined for the gripping arm 115 and the part 12 is removed without adjusting the joint 116. If an angle of inclination of the part 12 which deviates significantly from the cutting plan, as shown in figure 5a, has been detected by means of the sensor device 112, in step SE the gripping arm 115 is angularly adjusted, on the basis of the sensor data, at the joint 116 to compensate for the angle of inclination in order to grip and remove the inclined part 12 on the workpiece support 110, as illustrated in figure 5b for the removal complication shown in figure 5a.

In a variation of the examples for the complication class P3, the removal device 114 comprises a gripping arm 115 which does not have a joint, as illustrated in figure 5c. After the angle of inclination of the part 12 has been detected by the sensor device 112, in step SE of the method, a calculation is performed on the basis of the sensor data as to how the angle of inclination of the part 12 can be adjusted using a smart procedure with the gripping arm by drawing the gripping arm near to a point of the part 12 suitable for adjustment and docking it there. The centre of gravity of the part 12, which is known from the cutting plan or is determined by the sensor module 121, the comparison module 122 and/or by the identification module 123, can be taken into account when determining the suitable point. Then the part 12 is removed.

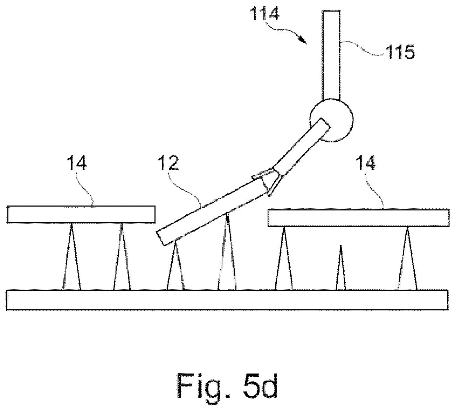

A further variation of the examples with the complication class P3 relates to a removal device 114 with a gripping arm 115 in the form of a clamping gripping arm, which has a joint 116 and can be angularly adjusted at said joint, as shown in figure 5d. The clamping gripping arm 115 is angularly adjusted in step SE of the method approximately according to the angle of inclination of the part 12 and grips the inclined part 12 at a lateral cutting surface, whereupon the part 12 is removed.

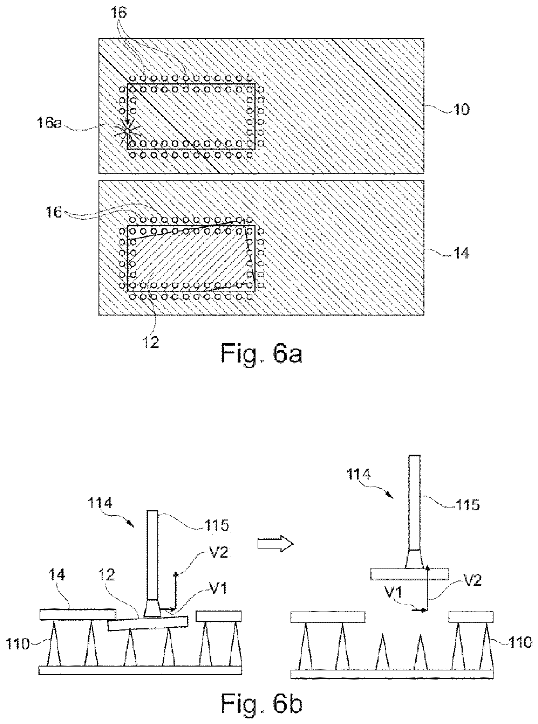

Figures 6a and 6b illustrate an example of a complication class P4 "part which is disposed in a position deviating from the cutting plan on a removal collision course to remainder of the workpiece 14". For example, the part 12 can be gripped with the gripping arm 115, but cannot be removed because it is wedged, has fallen out of the position corresponding to the cutting plan and/or has displaced other parts 12 or the remainder of the workpiece 14 or has been displaced by these.

In the upper drawing, figure 6a schematically shows the workpiece 10 before cutting in a plan view, with the part 12 to be cut according to the cutting plan being indicated. The part 12 is cut counter-clockwise by the laser beam 16a. The grey regions are monitored along predetermined points 16 inside and outside the cutting contour. Finally, the part 12 is detached from the remainder of the workpiece 14 by the laser beam 16a, but undesirably moves with one of its lateral cutting surfaces under the remainder of the workpiece 14 after detachment. After cutting, the cut part 12 is therefore in a position that deviates from the cutting plan, as illustrated schematically in a plan view in the lower drawing of figure 6a. That is, in the present example, the cut part 12 cannot be removed from the remainder of the workpiece 14 with a standard removal procedure because it would collide with the remainder of the workpiece, and therefore has a removal complication of complication class P4. As illustrated schematically in figure 6b in a lateral cross-sectional view, the gripping arm 115 in the present example of the removal device 114 is not equipped with a joint. In step SE of the method, after the undesired position of part 12 has been detected by the sensor device 112 in step SA and part 12 has been identified and classified in steps SB and SC, movement vectors for the gripping arm 115 are calculated using the sensor data. A lateral movement vector V1 is calculated, with which the gripping arm 115, after gripping the part 12, can move it from its position below the remainder of the workpiece 14 from the collision course to a position approximately corresponding to the cutting plan. Furthermore, a vertical movement vector V2 is calculated, with which the part 12 can be moved out of the position roughly corresponding to the cutting plan and can be removed from the remainder of the workpiece 14. In step SE of the method, the gripping arm 115 is controlled and moved according to the movement vectors V1 and V2. The movement of the gripping arm can also be observed by the sensor device 112 and, if necessary, corrected by calculations. The part 12 of the complication class P4 is thus removed using a smart procedure, with a collision with the remainder of the workpiece 14 being avoided. If the sensor device 112 observes that, despite a smart procedure, the part 12 cannot be removed without moving the entire remainder of the workpiece 14 and parts 12 that have not yet been removed and optionally sorted, the removal is aborted. In a variation of this example, a gripping arm 115 with a joint can also be used.

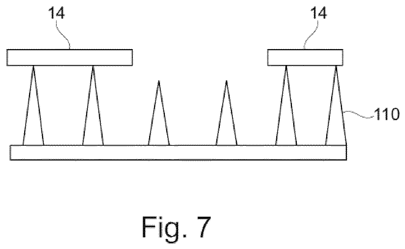

Figure 7 shows an example of a complication class P5, "part that is disposed in a position deviating from the cutting plan beyond reach or within reach of the removal device". In the present example, the cut part 12 has moved out of the position corresponding to the cutting plan after complete cutting, for example because it has shifted due to vibrations of the workpiece support 110 or due to the gas pressure of a cutting gas used during laser cutting. The cut part 12 is therefore not present at the position intended by the cutting plan or at another position within reach of the removal device 114, which is determined using the sensor data. Therefore, in a handling step of step SE, the removal of the classified part 12 disposed at a position deviating from the cutting plan beyond reach of the removal device 114 does not occur, and removal complication information is output. Optionally, a part corresponding to the missing part 12 is scheduled to be cut for the further course of the method. In an alternative handling step, if the classified part 12 is disposed at a position deviating from the cutting plan within reach (not shown) of the removal device 114, the part 12 is located using the sensor data. If there is no additional removal complication, the gripping arm 115 of the removal device is moved to the located position of the part 12 and the part 12 is removed.

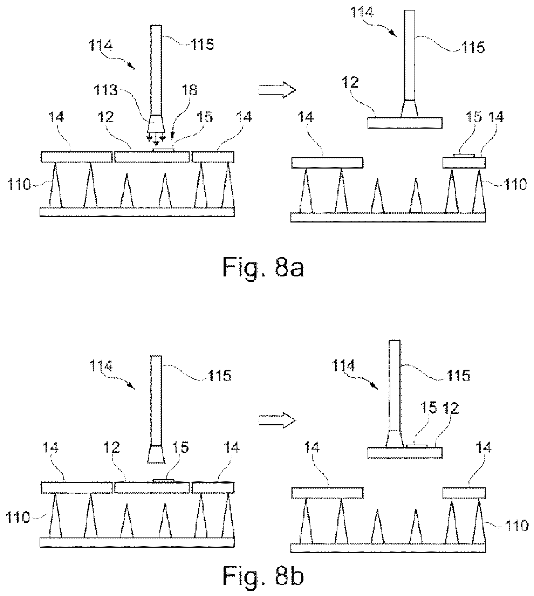

Figures 8a to 8c show an example of a complication class P6 "part which has workpiece waste material and/or a contamination in a contact region of the part provided for the removal device". After cutting, there is a contamination 15, for example a workpiece waste material, on the cut part 12. As is illustrated in the drawing on the left in figure 8a, there is a removal complication if there is contamination 15 in a contact region 18 of the part 12 provided for the removal device 114. In step SA of the method, the sensor device 112 detects the cut parts in the remainder of the workpiece 14, including the part 12 with the contamination 15, corresponding sensor data are provided and the sensor data are compared with the cutting plan. The cut part 12 with the contamination 15 is identified in step SB on the basis of the sensor data. In step SC, the identified part 12 is assigned the complication class P6. In step SD, cut parts which are free of a removal complication are removed by means of the removal device 114. In step SE, the classified part 12 with the contamination 15 is handled according to at least one handling step assigned to the complication class P6.

In an exemplary handling step illustrated in figure 8a, the contamination 15 is located using the sensor data. If the contamination 15 is present in a contact region 18 of the part 12 provided for the removal device 114, the contamination 15 is removed with a cleaning device 113 on the basis of the sensor data. In the present example, the cleaning device 113 is designed as a compressed-air cleaner that is integrated into the gripping arm 115 of the removal device 114. The contamination 15 is removed by means of the cleaning device 113 by being displaced by the compressed-air cleaner, for example, onto the remainder of the workpiece 14, as shown schematically in figure 8a. The cleaned part 12 is contacted with the gripping arm 115 in the intended contact region 18 and removed. The part 12 is therefore taken from the complication class P6 with an smart procedure. Alternatively, the cleaning device 113 can be designed as a vacuum cleaner, with which the contamination 15 is removed.

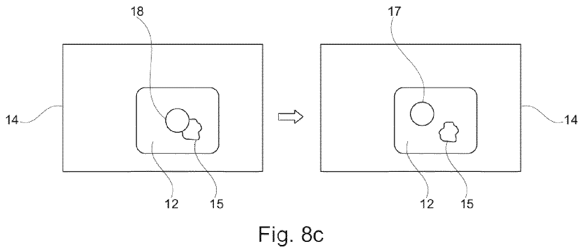

An alternative handling step is illustrated in figure 8b in a lateral cross-sectional view and in figure 8c in top plan view. This handling step includes locating the contamination 15 using the sensor data. If the contaminant 15 is present in a contact region 18 of the part 12 provided for the removal device 114, the steps of contacting the classified part 12 with the gripping arm 115 of the removal device 114 at a contact position 17 outside the intended contact region 18 on the basis of the sensor data and removing the part 12 are carried out by means of the removal device, with the contamination remaining on the part 12. In this case, a contamination-free contact position outside the intended contact region 18 is selected as the contact position 17 on the basis of the sensor data. Optionally, information about the shape and/or the material of the part 12, e.g. the weight and/or the centre of gravity of the part 12, is taken into account for finding the contact position 17 outside the intended contact region 18.

Alternatively, in the case of a contaminated part 12 in the handling step of step SE, a decision is made on the basis of the sensor data obtained in step SA as to whether one or more, e.g. a combination and/or a repetition, of the procedures described above for removing the part 12 with complication class P6 is used. A handling step for the complication class P6 includes, for example, a handling of the part 12 by means of the cleaning device 113, as shown in figure 8a, and a monitoring of the cleaning success by the sensor device 112. If it is determined on the basis of the sensor data that there is still contamination 15 on the part 12, the part 12, as shown in figures 8b and 8c, is contacted with the gripping arm 115 of the removal device 114 at the contact position 17 outside the intended contact region 18 and removed, or the cleaning step is repeated.

In other examples, the cut part 12 has two or more removal complications and the identified part 12 is assigned two or more complication classes in step SC. In such cases, the handling step of step SE uses the sensor data to decide whether and/or in which order the handling steps assigned to the respective complication classes are to be performed. If a cut part 12 is contaminated (complication class P6) and has slipped under the remainder of the workpiece 14 (complication class P4), a handling step for complication class P6 is first performed and then a handling step for complication class P4. Alternatively, the handling steps for complication classes P4 and P6 can be combined, e.g. gripping the part 12 outside the contact position and calculating the vectors V1 and V2.

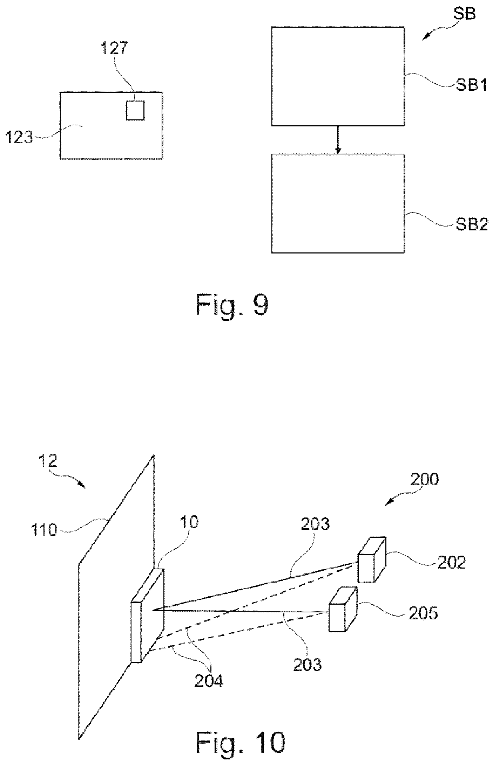

In another example of the method, as illustrated in figure 9, step SB includes an analysis of the sensor data and an estimation of the removal complication. The sensor data are analysed in a step SB1 to determine grey regions around sides of the part, and in a step SB2 the removal complication is estimated from the grey regions using a neural network. For this purpose, the control device 120 in the identification module 123 has an assessment module 127 for this purpose, which is designed to analyse sensor data for determining grey regions around sides of the part. The assessment module 127 includes a neural network for estimating the removal complication from the grey regions. The estimated removal complication and the resulting complication class form the basis for the further steps of the method. In the present example, the neural network is a deep neural network (DNN) in the form of a convolutional neural network (CNN).

In the first example described above, the sensor device 112 contains two two-dimensional imaging cameras, which are arranged at different positions, as an optical sensor with which sensor data on the cut parts 12 are obtained from two different lateral observation angles. Alternatively, the sensor device 112 has at least one camera that can be arranged at at least two different recording positions. In another example, the workpiece 10 is illuminated with light sources from four directions. The shadows in images obtained by the optical sensor are analysed on the basis of the sensor data. Since a detected part 12 disposed above other detected parts 12 or the remainder of the workpiece 14 does not produce a shadow, depth information can be obtained.

Figures 10 to 12 illustrate examples of the sensor device 112 with which depth information about the cut parts 12 is obtained and this is captured three-dimensionally. Depth information about the workpiece support 110, about the remainder of the workpiece 14 and about the workpiece 10 can also be obtained.

Figure 10 shows a TOF camera 200 (TOF: time of flight) that is used as a sensor in an example of the sensor device 112. In order to calculate distances, the TOF camera evaluates the phase shift between a reference signal (transmitted signal) and a received signal reflected by the cut part 12 to be detected. The phase shift of the two signals is proportional to the distance from the captured pixel. The TOF camera has an emitter 202 which emits homogeneous light cones 203, 204 with modulated intensity. A detector 205 for the reflected homogeneous light cones 203, 204 is provided in the TOF camera at a distance from the emitter 202. The homogeneous light cones 203, 204 are directed onto the workpiece 10 to be cut, reflected from there and detected by the detector 205. In this case, the detector 205 measures the time required for the light to reach the illuminated region of the workpiece 10 and back again for each detected pixel of the workpiece 10. The time required is directly proportional to the distance from the relevant pixel. In this way, depth information about the parts 12 is obtained.

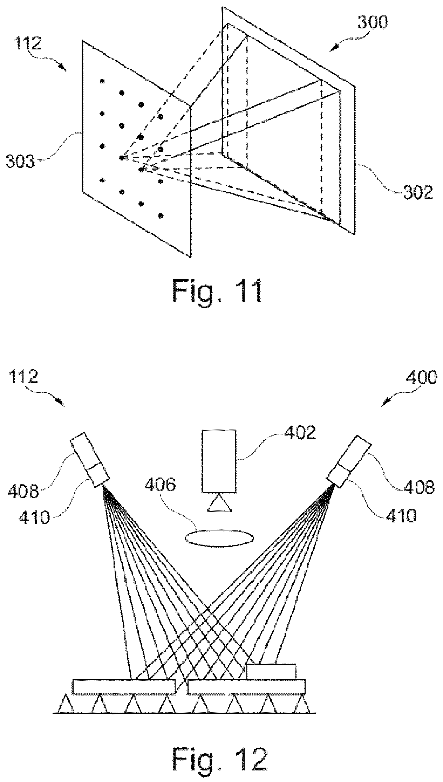

In a further example illustrated in figure 11, the sensor device 112 has a light field camera 300. Each pixel is captured with the light field camera 300 from a plurality of viewing angles, e.g. by a grid 303 (array) of microlenses 304 in front of a flat sensor 302. Each pixel is broken up again by the lens grid 303 and expanded to form a cone, which impinges on the surface of the sensor 302. This reveals the direction from which the light beam of the relevant pixel comes, and depth information about the parts 12 is obtained.

Figure 12 shows a pattern projector 400 included in the sensor device 112 as another example. The pattern projector 400 has a camera 402, which is preceded by a filter 406. Furthermore, two light sources 408, for example laser sources, are provided, each of which is preceded by an optical unit 410 for generating a pattern of the light beams. The light sources 408 are arranged such that the patterns impinge on the workpiece 10 from two different angles in a predetermined pattern combination. The pattern combination is captured with the camera 402. The depth information about the cut parts 12 is obtained from changes in the predetermined pattern combination. The depth information, i.e. three-dimensional information, is produced by triangulation. The camera 402 detects, e.g. as shown in figure 12 from above, while the light sources 408 are mounted laterally. Alternatively, the sensor device 112 can have at least one lidar (light detection and ranging) system 500 with a lidar sensor. Like the TOF camera, the lidar system evaluates the time-of-flight information of light that is reflected by the workpiece 10. A height profile of the workpiece 10 along a straight line or even a surface can be created by at least one moving detector, e.g. a camera, of the sensor device 112 or by a plurality of detectors of the sensor device 112. The sensor device 112 can also have at least one ultrasonic sensor 600 with which sensor data are obtained. The ultrasonic sensor 600 creates a three-dimensional model of the detected region of the workpiece 10 using an ultrasonic source, a microphone array and an evaluation unit.

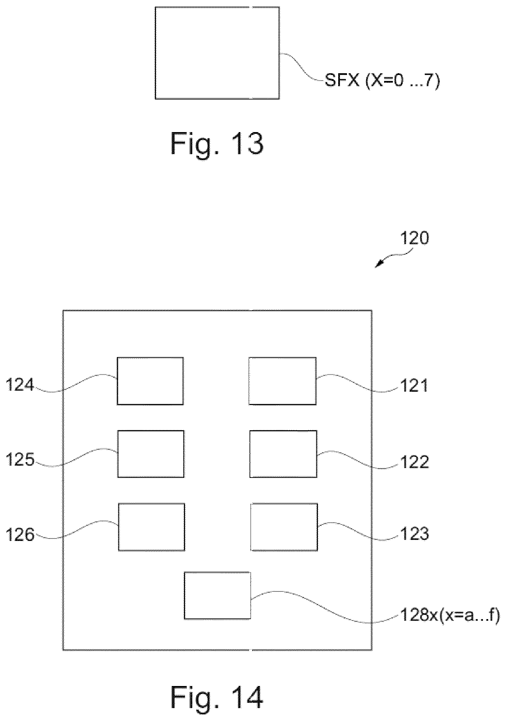

In further examples, the laser cutting apparatus 100 is configured to provide and perform additional steps in the method for cutting and removing, as illustrated in figures 13 and 14. Figure 13 illustrates the additional steps SFX with X = 0 to 7 of the method, wherein, if implemented in the method, the method includes at least one of the steps SF0 to SF7. Figure 14 shows the control device 120 comprising additional modules 128x, with x = a to e, to provide the additional steps, wherein, if implemented in the control device 120, the control device 120 includes at least one of the modules 128a through 128e. Furthermore, the control device 120 can include and/or be connected to an information output unit 128f.

In one example, the laser cutting apparatus 100 is configured such that the removal of the parts 12 which are free of a removal complication and/or the handling of the classified parts 12 and/or the removal of the classified parts 12 involves sorting the parts according to shape similarity in accordance with a step SF0. For example, the control device 120 and the removal device 114 are designed to apply at least one sorting parameter for shape similarity contained in the cutting plan when removing each part 12 and to sort the parts 12 according to shape similarity. For example, the control device 120 includes a sorting module 128a.

In one example, the handling module 126 is designed to capture data about the handling steps that have been carried out. In the method according to this example, this is done in step SF1 shown in figure 13. Said data can be made available to other modules of the control device 120.

Furthermore, in a further example, the control device 120 has a control module 128b. In order to avoid removal complications, the control module 128b adjusts at least one element selected from a cutting parameter, in particular at least one cutting parameter that adjusts the width of a cutting gap, a removal parameter, a removal strategy, the sorting parameter and a sorting strategy, using the data on the handling steps performed. In the method, this takes place in step SF2. In the method according to this example, the adjusted parameters and/or the adjusted strategies are used in a step for controlling the cutting of the parts, the removal of the parts and/or the sorting of the parts.

According to other examples, a nesting module 128c is provided in the control device 120, which is designed to define the cutting plan and to adjust the cutting plan to avoid removal complications using the data on the handling steps carried out. In the method according to these examples, the latter takes place in step SF3. In this way, the method and the quality of the parts 12 produced are optimised on the basis of the data on the handling steps performed.

In a further example, the control device 120 contains a monitoring module 128d for monitoring the removal and/or sorting of parts 12 using the sensor device 112. In the method according to this example, the monitoring is done in step SF4.

In another example, the control device 120 contains a checking module 128e for checking the workpiece support 110 by means of the sensor device 112 during the method and/or in a final method step, and/or for outputting wear information in the case of wear of the workpiece support to an information output unit 128f of the control device 120. In the method, checking is performed in step SF5. The wear information indicates which elements of the workpiece support have to be replaced and when. Wear information is output in step SF6 of the method. Furthermore, in the case of contamination of the workpiece support, cleaning of same is initiated. In the method, the latter takes place in step SF7.

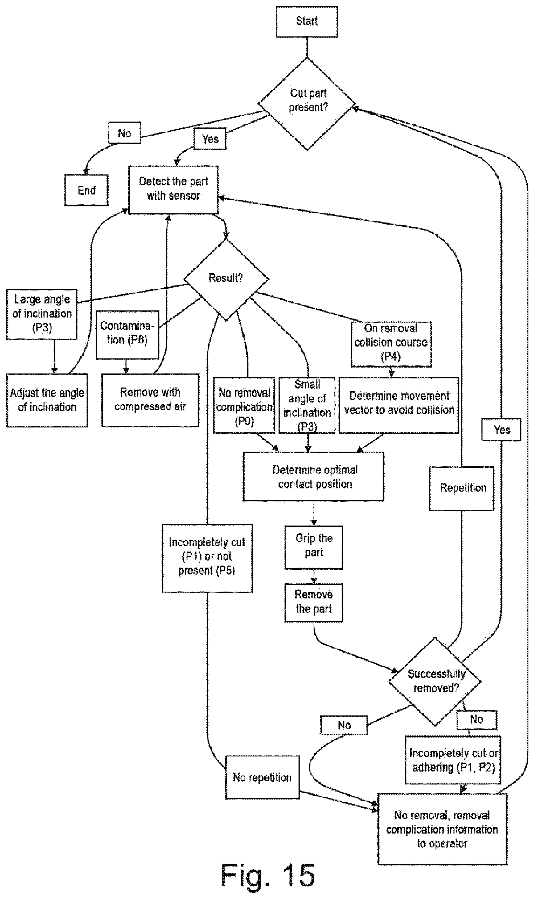

Figure 15 illustrates a second example of the method. The method is started and it is determined whether there is a cut part 12, for example by means of the sensor device 112. If there is no cut part 12, the method ends. If a cut part 12 is present, the part is detected by the sensor device 112. It is determined as to whether there is a result from the detection. If the result is determined to be a large angle of inclination of the part according to the complication class P3, the control device 120 issues the command to the gripping arm 115 of the removal device 114 to adjust the angle of inclination. If a contamination 15 is found on the intended contact region 18 of the part 12 according to complication class P6, the cleaning device 113 is instructed to remove the contamination using compressed air. If there is no removal complication according to complication class P0 or if it is determined that the part 12 has a small angle of inclination according to complication class P3, the command to the handling module 126 is given to define the optimum contact position for the removal device 114. If it is determined as a result that the part 12 is disposed on a removal collision course to the remainder of the workpiece 14 according to complication class P4, the command is sent to the handling module 126 to define at least one movement vector V1, V2 for the removal device 114 to avoid the collision. Then the command is given to the handling module 126 to determine the optimal contact position for the removal device 114. After the handling module 126 has been instructed to define the optimal contact position in the cases of complication classes P0, P3 or P4, the command is issued to the removal device 114 to grip the part 12 and then to remove the part 12. A determination is then made as to whether the part 12 was successfully removed. If the part 12 is successfully removed, a determination is made as to whether there is another cut part 12 and the method continues. If the part 12 has not been successfully removed, removal complication information is output, the part 12 is not removed, and it is determined as to whether there is another cut part 12, and the method is continued. If the part 12 was not successfully removed and one of the removal complications of complication classes P1 and P2 is then determined, namely that the part 12 is incompletely cut and adheres to the remainder of the workpiece 14 or that the part adheres to the workpiece support 110, removal complication information is output, the part 12 is not removed and it is determined whether there is another cut part 12, and the method continues. Alternatively, if the part 12 was not successfully removed, the removal process is repeated, with the part 12 being detected again by the sensor device 112. If, when detecting the part 12 with the sensor device 112, it is determined as a result that the part 12 is incompletely cut according to complication class P1 or is not present at the position corresponding to the cutting plan according to complication class P5, no repetition of the removal is initiated, removal complication information is output, the part 12 is not removed and it is determined whether there is another cut part 12, and the method is continued.

### List of reference signs

- 10: Workpiece
- 12: Part
- 13a: Connection point
- 13b: Weld joint
- 14: Remainder of the workpiece
- 15: Contamination
- 16: Point
- 16a: Laser beam
- 17: Contact position
- 18: Contact region
- 100: Apparatus for cutting parts from a workpiece according to a cutting plan and for removing the cut parts from a remainder of the workpiece; laser cutting apparatus
- 105: Cutting head
- 107: Laser beam, cutting tool
- 110: Workpiece support
- 112: Sensor device
- 113: Cleaning device
- 114: Removal device
- 115: Gripping arm
- 116: Joint
- 120: Control device
- 121: Sensor module
- 122: Comparison module
- 123: Identification module
- 124: Classification module
- 125: Removal module
- 126: Handling module
- 127: Assessment module
- 128a: Sorting module
- 128b: Control module
- 128c: Nesting module
- 128d: Monitoring module
- 128e: Checking module
- 128f: Information output unit
- 200: TOF camera
- 202: Emitter
- 203: Light cone
- 204: Light cone
- 205: Detector
- 300: Light field camera
- 302: Sensor
- 303: Lens grid
- 400: Pattern projector
- 402: Camera
- 406: Filter
- 408: Light source
- 410: Optical unit
- P0: Complication class
- P1: Complication class
- P2: Complication class
- P3: Complication class
- P4: Complication class
- P5: Complication class
- P6: Complication class
- SA: Step
- SB: Step
- SC: Step
- SD: Step
- SE: Step; handling step
- SF0: Step; sorting
- SF1: Step
- SF2: Step
- SF3: Step
- SF4: Step
- SF5: Step
- SF6: Step
- SF7: Step
- V1: Movement vector
- V2: Movement vector

## Claims

1. A laser cutting apparatus (100) for cutting parts according to a cutting plan from a workpiece (10) and for removing the cut parts (12) from a remainder of the workpiece (14);
including a cutting head (105), a workpiece support (110), a sensor device (112) for detecting the cut parts (12) in the remainder of the workpiece, a removal device (114) for removing the parts (12) and a control device (120);
wherein the control device (120) has
- a sensor module (121) adapted to control the sensor device and to provide sensor data on the detected cut parts (12),
- a comparison module (122) adapted to compare the sensor data with the cutting plan;
- an identification module (123) adapted to identify cut parts with at least one removal complication on the basis of the sensor data;
**characterised in that** the control device (120) has
- a classification module (124) adapted to classify the identified parts (12) according to a predetermined removal complication classification including at least two complication classes (P0; P1; P2; P3; P4; P5; P6) and to assign at least one complication class (P0; P1; P2; P3; P4; P5; P6) to each identified part;
- a removal module (125) adapted to control the removal device (114) for removal of cut parts (12) which are free of a removal complication and classified parts (12); and
- a handling module (126) adapted to control a handling of the classified parts (12) with at least one removal complication according to at least one handling step (SE) assigned to the complication class.

2. The apparatus according to claim 1,
wherein the identification module (123) is designed to identify cut parts (12) which are free of a removal complication on the basis of the sensor data; and/or
wherein the classification module (124) is designed to classify the identified parts (12) which are free of a removal complication according to the predetermined removal complication classification; and/or
wherein the removal module (125) is designed to control the removal device (114) for the removal of the classified parts (12) which are free of a removal complication.

3. The apparatus according to claim 1 or 2,
wherein the removal complication classification comprises at least one of the following complication classes (P0; P1; P2; P3; P4; P5; P6) selected from:
- part (12) which is incompletely cut (P1);
- part (12) which is adhering to the workpiece support (P2);
- part (12) which is disposed at an angle of inclination deviating from the cutting plan (P3);
- part (12) which is disposed in a position deviating from the cutting plan on a removal collision course to the remainder of the workpiece (P4);
- part (12) which is disposed in a position deviating from the cutting plan beyond reach or within reach of the removal device (114) (P5);
- part (12) which has workpiece waste material and/or a contamination in a contact region (12) of the part provided for the removal device (114) (P6); and
- part (12) which is free of a removal complication (P0).

4. The apparatus according to any one of claims 1 to 3,
wherein the apparatus has an information output unit (128f) and/or a cleaning device (113); and/or
wherein the at least one handling step (SE) is selected from
- re-cutting a classified part (12) which is incompletely cut;
- refraining from removing a classified part (12) which is incompletely cut and/or adhering to a workpiece support, outputting removal complication information to the information output unit (128f) and/or scheduling the cutting of a corresponding part (12);
- removing a classified part (12) which is disposed at an angle of inclination deviating from the cutting plan by means of the removal device (114), wherein a gripping unit (115), in particular a gripping arm, of the removal device (114) is angularly adjusted on the basis of the sensor data to compensate for the angle of inclination;
- removing a classified part (12) which is disposed in a position deviating from the cutting plan on a removal collision course to the remainder of the workpiece by means of the removal device (114), wherein the removal device is controlled on the basis of the sensor data in order to avoid the collision course;
- refraining from removing a classified part (12) which is disposed in a position deviating from the cutting plan beyond reach of the removal device (114), outputting removal complication information to the information output unit (128f) and/or scheduling the cutting of a corresponding part (12);
- locating a classified part (12) which is disposed in a position deviating from the cutting plan within reach of the removal device (114) and removing the classified part (12) by means of the removal device;
- locating a workpiece waste material and/or a contamination (15) present in a contact region (18) of a classified part (12) provided for the removal device (114) on the basis of the sensor data, removing the workpiece waste material and/or the contamination (15) by means of a cleaning device on the basis of the sensor data and removing the classified part (12) by means of the removal device (114); and
- locating a workpiece waste material and/or a contamination (15) present in a contact region (18) of a classified part (12) provided for the removal device (114) on the basis of the sensor data, contacting the classified part (12) by means of the removal device outside the contact region on the basis of the sensor data and removing the classified part (12) by means of the removal device.

5. The apparatus according to any one of claims 1 to 4,
wherein the apparatus is designed for sorting the parts (12), in particular for sorting the parts according to shape similarity; and/or
wherein the control device (120) and/or the removal device (114) can be designed, in the case of at least one step selected from the removal of the cut parts (12) which are free of a removal complication, the handling of the classified parts (12) with at least one removal complication, the removal of the classified parts (12) with at least one removal complication, and the removal of the classified parts (12) which are free of a removal complication, to initiate and/or to carry out sorting of the parts (12), in particular sorting according to shape similarity.

6. The apparatus according to any one of claims 1 to 5,
wherein the sensor device (112) is stationary or mobile; and/or
wherein the control device (120) has an assessment module (127) which is designed to analyse sensor data to determine grey regions around sides of the part (12) and/or has a neural network for estimating the removal complication; and/or
wherein the sensor device (112) comprises at least one element selected from at least one optical sensor; at least one camera that can be arranged at at least two different recording positions, or at least two cameras that are arranged at different positions; at least one TOF camera (200) which is designed to obtain depth information about the parts (12); at least one light field camera (300) which is designed to obtain depth information about the parts (12); at least one pattern projector (400); at least one lidar system; and at least one ultrasonic sensor which is designed to obtain sensor data.

7. The apparatus according to any one of claims 1 to 6,
wherein the control device (120) has a memory unit in which at least one element is stored which is selected from the cutting plan, the sensor data, the removal complication classification, the complication classes, the at least one handling step, at least one cutting parameter, at least a removal parameter, at least one removal strategy, at least one sorting parameter and at least one sorting strategy;
and/or wherein the handling module (126) and/or the sensor module (121) is designed to capture data on the handling steps (SE) performed.

8. The apparatus according to any one of claims 1 to 7,
wherein the removal device (114) has at least one gripping unit (115), in particular at least one magnetic gripping arm, at least one suction gripping arm or at least one clamping gripping arm; and/or
wherein the gripping unit (115) of the removal device is angularly adjustable and the removal module is designed to control the gripping unit of the removal device on the basis of the sensor data in order to adjust an angle of inclination of a classified part (12) that deviates from the cutting plan in a compensatory manner.

9. A method for cutting parts according to a cutting plan from a workpiece (10) and for removing the cut parts (12) from a remainder of the workpiece (14), by an apparatus (100, 105) for cutting parts according to a cutting plan from a workpiece (10) and for removing the cut parts (12) from a remainder of the workpiece (14) according to any one of the preceding claims, including the steps:
- detecting the cut parts (12) in the remainder of the workpiece (14) by means of the sensor device (112), providing sensor data on the detected cut parts (12) and comparing the sensor data with the cutting plan (SA);
- identifying cut parts (12) with at least one removal complication on the basis of the sensor data (SB);
- classifying the identified parts (12) according to a predetermined removal complication classification including at least two complication classes (P0; P1; P2; P3; P4; P5; P6), wherein each identified part is assigned at least one complication class (P0; P1; P2; P3; P4; P5; P6) (SC);
- removing cut parts (12) which are free of a removal complication by means of the removal device (114) (SD); and
- handling the classified parts (12) with at least one removal complication according to at least one handling step (SE) assigned to the complication class (P0; P1; P2; P3; P4; P5; P6).

10. The method according to claim 9,
wherein the step of identifying (SB) includes identifying the cut parts (12) which are free of a removal complication on the basis of the sensor data; and/or
wherein the step of classifying (SC) includes classifying the identified parts (12) which are free of a removal complication according to the predetermined removal complication classification; and/or
wherein the step of removing (SD) the cut parts (12) which are free of a removal complication includes removing the classified parts which are free of a removal complication.

11. The method according to any one of claims 9 and 10,
wherein the removal complication classification comprises at least one of the following complication classes (P0; P1; P2; P3; P4; P5; P6) selected from:
- part (12) which is incompletely cut (P1);
- part (12) which is adhering to a workpiece support (P2);
- part (12) which is disposed at an angle of inclination deviating from the cutting plan (P3);
- part (12) which is disposed in a position deviating from the cutting plan on a removal collision course to the remainder of the workpiece (P4);
- part (12) which is disposed in a position deviating from the cutting plan beyond reach or within reach of the removal device (114) (P5);
- part (12) which has workpiece waste material and/or a contamination in a contact region (18) of the part provided for the removal device (114) (P6); and
- part (12) which is free of a removal complication (P0).

12. The method according to any one of claims 9 to 11,
wherein the at least one handling step (SE) is selected from
- re-cutting a classified part (12) which is incompletely cut;
- refraining from removing a classified part (12) which is incompletely cut and/or adhering to a workpiece support (110), outputting removal complication information and/or scheduling the cutting of a corresponding part (12);
- removing a classified part (12) which is disposed at an angle of inclination deviating from the cutting plan by means of the removal device (114), wherein a gripping unit (115), in particular a gripping arm, of the removal device is angularly adjusted on the basis of the sensor data to compensate for the angle of inclination;
- removing a classified part (12) which is disposed in a position deviating from the cutting plan on a removal collision course to the remainder of the workpiece by means of the removal device (114), wherein the removal device is controlled on the basis of the sensor data in order to avoid the collision course;
- refraining from removing a classified part (12) which is disposed in a position deviating from the cutting plan beyond reach of the removal device (114), outputting removal complication information and/or scheduling the cutting of a corresponding part (12);
- locating a classified part (12) which is disposed in a position deviating from the cutting plan within reach of the removal device (114) and removing the classified part (12) by means of the removal device;
- locating a workpiece waste material and/or a contamination (15) present in a contact region (18) of a classified part (12) provided for the removal device (114) on the basis of the sensor data, removing the workpiece waste material and/or the contamination (15) by means of a cleaning device (113) on the basis of the sensor data and removing the classified part (12) by means of the removal device (114); and
- locating a workpiece waste material and/or a contamination (15) present in a contact region (18) of a classified part (12) provided for the removal device (114) on the basis of the sensor data, contacting the classified part (12) by means of the removal device outside the contact region on the basis of the sensor data and removing the classified part (12) by means of the removal device.

13. The method according to any one of claims 9 to 12,
wherein at least one step selected from the removal of the cut parts (12) which are free of a removal complication, the handling of the classified parts (12) with at least one removal complication, the removal of the classified parts (12) with at least one removal complication, and the removal of the classified parts (12) which are free of a removal complication includes a sorting (SF0) of the parts, in particular a sorting according to shape similarity; and/or wherein
the detection of the parts (12) in the remainder of the workpiece (14) includes optical detection.

14. The method according to any one of claims 9 to 13,
wherein the sensor device (112) is stationary or mobile; and/or
wherein the sensor data are analysed to determine grey regions around sides of the part (12) and/or the removal complication is estimated using a neural network;
and/or
wherein the sensor device (112) comprises at least one element selected from at least one optical sensor (200, 300; 400); at least one camera which is arranged at at least two different recording positions, or at least two cameras which are arranged at different positions; at least one TOF camera (200) with which depth information about the parts is obtained; at least one light field camera (300) with which depth information about the parts is obtained; at least one pattern projector (400); at least one lidar system; and at least one ultrasonic sensor with which sensor data are obtained.

15. A computer program comprising one or more program modules, which cause the apparatus according to any one of claims 1 to 8 to carry out the method steps according to any one of claims 9 to 14, in particular when the program modules are loaded into a memory unit of the apparatus.

## Patentansprüche

1. Laserschneidvorrichtung (100) zum Schneiden von Teilen gemäß einem Schneideplan aus einem Werkstück (10) und zum Entfernen der geschnittenen Teile (12) aus einem Rest des Werkstücks (14); einschließlich
eines Schneidkopfes (105), einer Werkstückhalterung (110), einer Sensorvorrichtung (112) zum Erkennen der geschnittenen Teile (12) im Rest des Werkstücks, einer Entfernungsvorrichtung (114) zum Entfernen der Teile (12) und einer Steuervorrichtung (120);
wobei die Steuervorrichtung (120)
- ein Sensormodul (121) aufweist, das dazu ausgelegt ist, die Sensorvorrichtung zu steuern und Sensordaten zu den erfassten geschnittenen Teilen (12) bereitzustellen,
- ein Vergleichsmodul (122), das dazu ausgelegt ist, die Sensordaten mit dem Schneideplan zu vergleichen;
- ein Identifizierungsmodul (123), das dazu ausgelegt ist, geschnittene Teile mit mindestens einer Entfernungskomplikation auf der Grundlage der Sensordaten zu identifizieren;
**dadurch gekennzeichnet, dass** die Steuervorrichtung (120)
- ein Klassifizierungsmodul (124) aufweist, das dazu ausgelegt ist, die identifizierten Teile (12) gemäß einer vorbestimmten Entfernungskomplikationsklassifizierung, die mindestens zwei Komplikationsklassen (P0; P1; P2; P3; P4; P5; P6) beinhaltet, zu klassifizieren und jedem identifizierten Teil mindestens eine Komplikationsklasse (P0; P1; P2; P3; P4; P5; P6) zuzuweisen;
- ein Entfernungsmodul (125), das dazu ausgelegt ist, die Entfernungsvorrichtung (114) zum Entfernen von geschnittenen Teilen (12), die frei von einer Entfernungskomplikation sind, und klassifizierten Teilen (12) zu steuern; und
- ein Handhabungsmodul (126), das dazu ausgelegt ist, eine Handhabung der klassifizierten Teile (12) mit mindestens einer Entfernungskomplikation gemäß mindestens einem der Komplikationsklasse zugeordneten Handhabungsschritt (SE) zu steuern.

2. Vorrichtung nach Anspruch 1,
wobei das Identifizierungsmodul (123) dazu ausgelegt ist, auf der Grundlage der Sensordaten geschnittene Teile (12) zu identifizieren, die frei von einer Entfernungskomplikation sind; und/oder
wobei das Klassifizierungsmodul (124) dazu ausgelegt ist, die identifizierten Teile (12), die frei von einer Entfernungskomplikation sind, gemäß der vorbestimmten Entfernungskomplikationsklassifizierung zu klassifizieren; und/oder
wobei das Entfernungsmodul (125) dazu ausgelegt ist, die Entfernungsvorrichtung (114) zum Entfernen der klassifizierten Teile (12), die frei von einer Entfernungskomplikation sind, zu steuern.

3. Vorrichtung nach Anspruch 1 oder 2,
wobei die Entfernungskomplikationsklassifizierung mindestens eine der folgenden Komplikationsklassen (P0; P1; P2; P3; P4; P5; P6) umfasst, ausgewählt aus:
- Teil (12), das unvollständig geschnitten ist (P1);
- Teil (12), das an der Werkstückhalterung haftet (P2);
- Teil (12), das in einem vom Schneideplan abweichenden Neigungswinkel angeordnet ist (P3);
- Teil (12), das in einer vom Schneideplan abweichenden Position auf Entfernungskollisionskurs mit dem Rest des Werkstücks angeordnet ist (P4);
- Teil (12), das in einer vom Schneideplan abweichenden Position außerhalb oder innerhalb der Reichweite der Entfernungsvorrichtung (114) angeordnet ist (P5);
- Teil (12), das Werkstückabfallmaterial und/oder eine Verunreinigung in einer Kontaktregion (12) des für die Entfernungsvorrichtung (114) bereitgestellten Teils aufweist (P6); und
- Teil (12), das frei von einer Entfernungskomplikation ist (P0).

4. Vorrichtung nach einem der Ansprüche 1 bis 3,
wobei die Vorrichtung eine Informationsausgabeeinheit (128f) und/oder eine Reinigungsvorrichtung (113) aufweist; und/oder
wobei der mindestens eine Handhabungsschritt (SE) ausgewählt ist aus
- Nachschneiden eines klassifizierten Teils (12), das unvollständig geschnitten ist;
- Unterlassen des Entfernens eines klassifizierten Teils (12), das unvollständig geschnitten ist und/oder an einer Werkstückhalterung haftet, Ausgeben von Entfernungskomplikationsinformationen an die Informationsausgabeeinheit (128f) und/oder Planen des Schneidens eines entsprechenden Teils (12);
- Entfernen eines klassifizierten Teils (12), das in einem vom Schneideplan abweichenden Neigungswinkel angeordnet ist, mittels der Entfernungsvorrichtung (114), wobei eine Greifeinheit (115), insbesondere ein Greifarm, der Entfernungsvorrichtung (114) auf der Grundlage der Sensordaten winklig eingestellt wird, um den Neigungswinkel auszugleichen;
- Entfernen eines klassifizierten Teils (12), das in einer vom Schneideplan abweichenden Position auf einem Entfernungskollisionskurs zum Rest des Werkstücks angeordnet ist, mittels der Entfernungsvorrichtung (114), wobei die Entfernungsvorrichtung auf der Grundlage der Sensordaten gesteuert wird, um den Kollisionskurs zu vermeiden;
- Unterlassen des Entfernens eines klassifizierten Teils (12), das in einer vom Schneideplan abweichenden Position außerhalb der Reichweite der Entfernungsvorrichtung (114) angeordnet ist, Ausgeben von Entfernungskomplikationsinformationen an die Informationsausgabeeinheit (128f) und/oder Planen des Schneidens eines entsprechenden Teils (12);
- Lokalisieren eines klassifizierten Teils (12), das an einer vom Schneideplan abweichenden Position innerhalb der Reichweite der Entfernungsvorrichtung (114) angeordnet ist, und Entfernen des klassifizierten Teils (12) mittels der Entfernungsvorrichtung;
- Lokalisieren eines Werkstückabfallmaterials und/oder einer Verunreinigung (15), die in einer Kontaktregion (18) eines für die Entfernungsvorrichtung bereitgestellten klassifizierten Teils (12) vorhanden sind (114), auf der Grundlage der Sensordaten, Entfernen des Werkstückabfallmaterials und/oder der Verunreinigung (15) mittels einer Reinigungsvorrichtung auf der Grundlage der Sensordaten und Entfernen des klassifizierten Teils (12) mittels der Entfernungsvorrichtung (114) ; und
- Lokalisieren eines Werkstückabfallmaterials und/oder einer Verunreinigung (15), die in einer Kontaktregion (18) eines für die Entfernungsvorrichtung (114) bereitgestellten klassifizierten Teils (12) vorhanden sind, auf der Grundlage der Sensordaten, Inkontaktbringen des klassifizierten Teils (12) mittels der Entfernungsvorrichtung außerhalb der Kontaktregion auf der Grundlage der Sensordaten und Entfernen des klassifizierten Teils (12) mittels der Entfernungsvorrichtung.

5. Vorrichtung nach einem der Ansprüche 1 bis 4,
wobei die Vorrichtung zum Sortieren der Teile (12) ausgelegt ist, insbesondere zum Sortieren der Teile gemäß Formähnlichkeit; und/oder
wobei die Steuervorrichtung (120) und/oder die Entfernungsvorrichtung (114) so ausgelegt sein kann, dass sie bei mindestens einem Schritt, ausgewählt aus der Entfernung der geschnittenen Teile (12), die frei von einer Entfernungskomplikation sind, der Handhabung der klassifizierten Teile (12) mit mindestens einer Entfernungskomplikation, der Entfernung der klassifizierten Teile (12) mit mindestens einer Entfernungskomplikation und der Entfernung der klassifizierten Teile (12), die frei von einer Entfernungskomplikation sind, die Sortierung der Teile (12), insbesondere die Sortierung gemäß Formähnlichkeit, initiiert und/oder durchführt.

6. Vorrichtung nach einem der Ansprüche 1 bis 5,
wobei die Sensorvorrichtung (112) stationär oder mobil ist; und/oder
wobei die Steuervorrichtung (120) ein Bewertungsmodul (127) aufweist, das dazu ausgelegt ist, Sensordaten zu analysieren, um Grauzonen um die Seiten des Teils (12) zu bestimmen, und/oder ein neuronales Netzwerk zum Abschätzen der Entfernungskomplikation aufweist; und/oder
wobei die Sensorvorrichtung (112) mindestens ein Element umfasst, ausgewählt aus mindestens einem optischen Sensor ; mindestens eine Kamera, die an mindestens zwei verschiedenen Aufnahmepositionen angeordnet werden kann, oder mindestens zwei Kameras, die an verschiedenen Positionen angeordnet sind; mindestens eine TOF-Kamera (200), die dazu ausgelegt ist, Tiefeninformationen über die Teile (12) zu erhalten; mindestens eine Lichtfeldkamera (300), die dazu ausgelegt ist, Tiefeninformationen über die Teile (12) zu erhalten; mindestens einen Musterprojektor (400); mindestens ein Lidar-System; und mindestens einen Ultraschallsensor, der dazu ausgelegt ist, Sensordaten zu erhalten.

7. Vorrichtung nach einem der Ansprüche 1 bis 6,
wobei die Steuervorrichtung (120) eine Speichereinheit aufweist, in der mindestens ein Element gespeichert ist, ausgewählt aus dem Schneideplan, den Sensordaten, der Entfernungskomplikationsklassifizierung, den Komplikationsklassen, dem mindestens einen Handhabungsschritt, mindestens einem Schneideparameter, mindestens einem Entfernungsparameter, mindestens einer Entfernungsstrategie, mindestens einem Sortierparameter und mindestens einer Sortierstrategie;
und/oder wobei das Handhabungsmodul (126) und/oder das Sensormodul (121) dazu ausgelegt ist, Daten zu den durchgeführten Handhabungsschritten (SE) aufzunehmen.

8. Vorrichtung nach einem der Ansprüche 1 bis 7,
wobei die Entfernungsvorrichtung (114) mindestens eine Greifeinheit (115) aufweist, insbesondere mindestens einen magnetischen Greifarm, mindestens einen Sauggreifarm oder mindestens einen Klemmgreifarm; und/oder
wobei die Greifeinheit (115) der Entfernungsvorrichtung winkelverstellbar ist und das Entfernungsmodul dazu ausgelegt ist, die Greifeinheit der Entfernungsvorrichtung auf der Grundlage der Sensordaten zu steuern, um einen vom Schneideplan abweichenden Neigungswinkel eines klassifizierten Teils (12) kompensierend einzustellen.

9. Verfahren zum Schneiden von Teilen gemäß einem Schneideplan aus einem Werkstück (10) und zum Entfernen der geschnittenen Teile (12) aus einem Rest des Werkstücks (14) durch eine Vorrichtung (100, 105) zum Schneiden von Teilen gemäß einem Schneideplan aus einem Werkstück (10) und zum Entfernen der geschnittenen Teile (12) aus einem Rest des Werkstücks (14) gemäß einem der vorstehenden Ansprüche, einschließlich der folgenden Schritte:
- Erkennen der geschnittenen Teile (12) im Rest des Werkstücks (14) mittels der Sensorvorrichtung (112), Bereitstellen von Sensordaten zu den erfassten geschnittenen Teilen (12) und Vergleichen der Sensordaten mit dem Schneideplan (SA);
- Identifizieren von geschnittenen Teilen (12) mit mindestens einer Entfernungskomplikation auf der Grundlage der Sensordaten (SB);
- Klassifizieren der identifizierten Teile (12) gemäß einer vorbestimmten Entfernungskomplikationsklassifizierung, die einschließlich mindestens zwei Komplikationsklassen (P0; P1; P2; P3; P4; P5; P6) ist, wobei jedem identifizierten Teil mindestens eine Komplikationsklasse (P0; P1; P2; P3; P4; P5; P6) zugeordnet wird (SC);
- Entfernen von geschnittenen Teilen (12), die frei von einer Entfernungskomplikation sind, mittels der Entfernungsvorrichtung (114) (SD); und
- Handhaben der klassifizierten Teile (12) mit mindestens einer Entfernungskomplikation gemäß mindestens einem Handhabungsschritt (SE), der der Komplikationsklasse (P0; P1; P2; P3; P4; P5; P6) zugeordnet ist.

10. Verfahren nach Anspruch 9,
wobei der Schritt des Identifizierens (SB) das Identifizieren der geschnittenen Teile (12) einschließt, die auf der Grundlage der Sensordaten frei von einer Entfernungskomplikation sind; und/oder
wobei der Schritt des Klassifizierens (SC) das Klassifizieren der identifizierten Teile (12),
die frei von einer Entfernungskomplikation sind, gemäß der vorbestimmten Entfernungskomplikationsklassifizierung einschließt; und/oder
wobei der Schritt des Entfernens (SD) der geschnittenen Teile (12), die frei von einer Entfernungskomplikation sind, das Entfernen der klassifizierten Teile einschließt, die frei von einer Entfernungskomplikation sind.

11. Verfahren nach einem der Ansprüche 9 und 10,
wobei die Entfernungskomplikationsklassifizierung mindestens eine der folgenden Komplikationsklassen (P0; P1; P2; P3; P4; P5; P6) umfasst, ausgewählt aus:
- Teil (12), das unvollständig geschnitten ist (P1);
- Teil (12), das an einer Werkstückhalterung haftet (P2);
- Teil (12), das in einem vom Schneideplan abweichenden Neigungswinkel angeordnet ist (P3);
- Teil (12), das in einer vom Schneideplan abweichenden Position auf Entfernungskollisionskurs mit dem Rest des Werkstücks angeordnet ist (P4);
- Teil (12), das in einer vom Schneideplan abweichenden Position außerhalb oder innerhalb der Reichweite der Entfernungsvorrichtung (114) angeordnet ist (P5);
- Teil (12), das Werkstückabfallmaterial und/oder eine Verunreinigung in einer Kontaktregion (18) des für die Entfernungsvorrichtung (114) bereitgestellten Teils aufweist (P6); und
- Teil (12), das frei von einer Entfernungskomplikation ist (P0).

12. Verfahren nach einem der Ansprüche 9 bis 11,
wobei der mindestens eine Handhabungsschritt (SE) ausgewählt ist aus
- Nachschneiden eines klassifizierten Teils (12), das unvollständig geschnitten ist;
- Unterlassen des Entfernens eines klassifizierten Teils (12), das unvollständig geschnitten ist und/oder an einer Werkstückhalterung (110) haftet, Ausgeben von Entfernungskomplikationsinformationen und/oder Planen des Schneidens eines entsprechenden Teils (12);
- Entfernen eines klassifizierten Teils (12), das in einem vom Schneideplan abweichenden Neigungswinkel angeordnet ist, mittels der Entfernungsvorrichtung (114), wobei eine Greifeinheit (115), insbesondere ein Greifarm, der Entfernungsvorrichtung auf der Grundlage der Sensordaten winklig eingestellt wird, um den Neigungswinkel auszugleichen;
- Entfernen eines klassifizierten Teils (12), das in einer vom Schneideplan abweichenden Position auf einem Entfernungskollisionskurs zum Rest des Werkstücks angeordnet ist, mittels der Entfernungsvorrichtung (114), wobei die Entfernungsvorrichtung auf der Grundlage der Sensordaten gesteuert wird, um den Kollisionskurs zu vermeiden;
- Unterlassen des Entfernens eines klassifizierten Teils (12), das in einer vom Schneideplan abweichenden Position außerhalb der Reichweite der Entfernungsvorrichtung (114) angeordnet ist, Ausgeben von Entfernungskomplikationsinformationen und/oder Planen des Schneidens eines entsprechenden Teils (12);
- Lokalisieren eines klassifizierten Teils (12), das an einer vom Schneideplan abweichenden Position innerhalb der Reichweite der Entfernungsvorrichtung (114) angeordnet ist, und Entfernen des klassifizierten Teils (12) mittels der Entfernungsvorrichtung;
- Lokalisieren eines Werkstückabfallmaterials und/oder einer Verunreinigung (15), die in einer Kontaktregion (18) eines für die Entfernungsvorrichtung bereitgestellten klassifizierten Teils (12) vorhanden sind (114) auf der Grundlage der Sensordaten , Entfernen des Werkstückabfallmaterials und/oder der Verunreinigung (15) mittels einer Reinigungsvorrichtung (113) auf der Grundlage der Sensordaten und Entfernen des klassifizierten Teils (12) mittels der Entfernungsvorrichtung (114) ; und
- Lokalisieren eines Werkstückabfallmaterials und/oder einer Verunreinigung (15), die in einer Kontaktregion (18) eines für die Entfernungsvorrichtung (114) bereitgestellten klassifizierten Teils (12) vorhanden sind, auf der Grundlage der Sensordaten, Inkontaktbringen des klassifizierten Teils (12) mittels der Entfernungsvorrichtung außerhalb der Kontaktregion auf der Grundlage der Sensordaten und Entfernen des klassifizierten Teils (12) mittels der Entfernungsvorrichtung.

13. Verfahren nach einem der Ansprüche 9 bis 12,
wobei mindestens ein Schritt, ausgewählt aus dem Entfernen der geschnittenen Teile (12), die frei von einer Entfernungskomplikation sind, dem Handhaben der klassifizierten Teile (12) mit mindestens einer Entfernungskomplikation, dem Entfernen der klassifizierten Teile (12) mit mindestens einer Entfernungskomplikation und dem Entfernen der klassifizierten Teile (12), die frei von einer Entfernungskomplikation sind, ein Sortieren (SF0) der Teile, insbesondere ein Sortieren gemäß Formähnlichkeit, einschließt; und/oder wobei
die Erkennung der Teile (12) im Rest des Werkstücks (14) eine optische Erkennung einschließt.

14. Verfahren nach einem der Ansprüche 9 bis 13,
wobei die Sensorvorrichtung (112) stationär oder mobil ist; und/oder
wobei die Sensordaten analysiert werden, um graue Bereiche um die Seiten des Teils (12) herum zu bestimmen, und/oder die Entfernungskomplikation unter Verwendung eines neuronalen Netzwerks geschätzt wird; und/oder
wobei die Sensorvorrichtung (112) mindestens ein Element umfasst, ausgewählt aus mindestens einem optischen Sensor (200, 300; 400) ; mindestens einer Kamera, die an mindestens zwei verschiedenen Aufnahmepositionen angeordnet ist, oder mindestens zwei Kameras, die an verschiedenen Positionen angeordnet sind; mindestens einer TOF-Kamera (200), mit der Tiefeninformationen über die Teile erhalten werden; mindestens einer Lichtfeldkamera (300), mit der Tiefeninformationen über die Teile erhalten werden; mindestens einem Musterprojektor (400); mindestens einem Lidar-System; und mindestens einem Ultraschallsensor, mit dem Sensordaten erhalten werden.

15. Computerprogramm, umfassend ein oder mehrere Programmmodule, die bewirken, dass die Vorrichtung nach einem der Ansprüche 1 bis 8 die Verfahrensschritte nach einem der Ansprüche 9 bis 14 ausführt, insbesondere wenn die Programmmodule in eine Speichereinheit der Vorrichtung geladen sind.

## Revendications

1. Appareil de découpe laser (100) pour découper des pièces selon un plan de découpe à partir d'une pièce (10) et pour retirer les pièces (12) découpées du reste de la pièce (14) ; comprenant
une tête de découpe (105), un support de pièce (110), un dispositif capteur (112) pour détecter les pièces (12) découpées dans le reste de la pièce, un dispositif de retrait (114) pour retirer les pièces (12) et un dispositif de commande (120) ;
dans lequel le dispositif de commande (120) comporte
- un module de capteur (121) adapté pour commander le dispositif capteur et pour fournir des données de capteur sur les pièces (12) découpées détectées,
- un module de comparaison (122) adapté pour comparer les données de capteur avec le plan de découpe ;
- un module d'identification (123) adapté pour identifier les pièces découpées avec au moins une complication liée au retrait sur la base des données de capteur ;
**caractérisé en ce que** le dispositif de commande (120) comporte
- un module de classification (124) adapté pour classifier les pièces (12) identifiées selon une classification prédéterminée de complication liée au retrait comprenant au moins deux classes de complications (P0 ; P1 ; P2 ; P3 ; P4 ; P5 ; P6) et pour attribuer au moins une classe de complications (P0 ; P1 ; P2 ; P3 ; P4 ; P5 ; P6) à chaque pièce identifiée ;
- un module de retrait (125) adapté pour amener le dispositif de retrait (114) à retirer les pièces (12) découpées qui ne présentent aucune complication liée au retrait et les pièces (12) classées ; et
- un module de manipulation (126) adapté pour commander la manipulation des pièces (12) classées avec au moins une complication liée au retrait selon au moins une étape de manipulation (SE) attribuée à la classe de complications.

2. Appareil selon la revendication 1,
dans lequel le module d'identification (123) est conçu pour identifier les pièces (12) découpées qui ne présentent aucune complication liée au retrait sur la base des données de capteur ; et/ou
dans lequel le module de classification (124) est conçu pour classifier les pièces (12) identifiées qui ne présentent aucune complication liée au retrait selon la classification prédéterminée des complications liées au retrait ; et/ou
dans lequel le module de retrait (125) est conçu pour amener le dispositif de retrait (114) à retirer les pièces (12) classées qui ne présentent aucune complication liée au retrait.

3. Appareil selon la revendication 1 ou 2,
dans lequel la classification des complications liées au retrait comprend au moins une des classes de complications suivantes (P0 ; P1 ; P2 ; P3 ; P4 ; P5 ; P6) sélectionnées parmi :
- pièce (12) qui est incomplètement découpée (P1) ;
- pièce (12) qui adhère au support de pièce (P2) ;
- pièce (12) qui est disposée à un angle d'inclinaison s'écartant du plan de découpe (P3) ;
- pièce (12) qui est disposée dans une position s'écartant du plan de découpe sur une trajectoire de collision de retrait vers le reste de la pièce (P4) ;
- pièce (12) qui est disposée dans une position s'écartant du plan de découpe au-delà ou à portée du dispositif de retrait (114) (P5) ;
- pièce (12) qui présente des déchets de pièce et/ou une contamination dans une zone de contact (12) de la pièce prévue pour le dispositif de retrait (114) (P6) ; et
- pièce (12) qui ne présente aucune complication liée au retrait (P0).

4. Appareil selon l'une quelconque des revendications 1 à 3,
l'appareil comportant une unité de sortie d'informations (128f) et/ou un dispositif de nettoyage (113) ; et/ou
dans lequel l'au moins une étape de manipulation (SE) est sélectionnée parmi
- le redécoupage d'une pièce (12) classée qui n'est pas entièrement découpée ;
- l'interdiction de retirer une pièce (12) classée qui n'est pas entièrement découpée et/ou adhérant à un support de pièce, la sortie d'informations sur les complications liées au retrait destinées à l'unité de sortie d'informations (128f) et/ou la planification de la découpe d'une pièce (12) correspondante ;
- le retrait d'une pièce (12) classée qui est disposée à un angle d'inclinaison s'écartant du plan de découpe au moyen du dispositif de retrait (114), dans lequel une unité de préhension (115), en particulier un bras de préhension, du dispositif de retrait (114) est ajustée angulairement sur la base des données de capteur pour compenser l'angle d'inclinaison ;
- le retrait d'une pièce (12) classée qui est disposée dans une position s'écartant du plan de découpe sur une trajectoire de collision de retrait vers le reste de la pièce au moyen du dispositif de retrait (114), dans lequel le dispositif de retrait est commandé sur la base des données de capteur afin d'éviter la trajectoire de collision ;
- l'interdiction de retirer une pièce (12) classée qui est disposée dans une position s'écartant du plan de découpe au-delà du dispositif de retrait (114), la sortie d'informations sur les complications liées au retrait destinées à l'unité de sortie d'informations (128f) et/ou la planification de la découpe d'une pièce (12) correspondante ;
- la localisation d'une pièce (12) classée qui est disposée dans une position s'écartant du plan de découpe à portée du dispositif de retrait (114) et le retrait de la pièce (12) classée au moyen du dispositif de retrait ;
- la localisation d'un déchet de pièce et/ou d'une contamination (15) présents dans une zone de contact (18) d'une pièce (12) classée prévue pour le dispositif de retrait (114) sur la base des données de capteur, le retrait du déchet de pièce et/ou de la contamination (15) au moyen d'un dispositif de nettoyage sur la base des données de capteur et le retrait de la pièce (12) classée au moyen du dispositif de retrait (114) ; et
- la localisation d'un déchet de pièce et/ou d'une contamination (15) présents dans une zone de contact (18) d'une pièce (12) classée prévue pour le dispositif de retrait (114) sur la base des données de capteur, l'entrée en contact avec la pièce (12) classée au moyen du dispositif de retrait en dehors de la zone de contact sur la base des données de capteur et le retrait de la pièce (12) classée au moyen du dispositif de retrait.

5. Appareil selon l'une quelconque des revendications 1 à 4,
l'appareil étant conçu pour trier les pièces (12), notamment pour trier les pièces selon leur similarité de forme ; et/ou
dans lequel le dispositif de commande (120) et/ou le dispositif de retrait (114) peuvent être conçus, dans le cas d'au moins une étape sélectionnée parmi le retrait des pièces (12) découpées qui ne présentent aucune complication liée au retrait, la manipulation des pièces (12) classées avec au moins une complication liée au retrait, le retrait des pièces (12) classées avec au moins une complication liée au retrait et le retrait des pièces (12) classées qui ne présentent aucune complication liée au retrait, pour initier et/ou effectuer le tri des pièces (12), en particulier le tri selon la similarité de forme.

6. Appareil selon l'une quelconque des revendications 1 à 5,
dans lequel le dispositif capteur (112) est fixe ou mobile ; et/ou
dans lequel le dispositif de commande (120) comporte un module d'évaluation (127) conçu pour analyser les données de capteur afin de déterminer les zones grises autour de côtés de la pièce (12) et/ou comporte un réseau neuronal pour estimer la complexité du retrait ; et/ou
dans lequel le dispositif de capteur (112) comprend au moins un élément sélectionné parmi au moins un capteur optique ; au moins une caméra qui peut être disposée dans au moins deux positions d'enregistrement différentes, ou au moins deux caméras disposées dans des positions différentes ; au moins une caméra TOF (200) conçue pour obtenir des informations de profondeur concernant les pièces (12) ; au moins une caméra à champ lumineux (300) conçue pour obtenir des informations de profondeur concernant les pièces (12) ; au moins un projecteur de motifs (400) ; au moins un système lidar ; et au moins un capteur ultrasonore conçu pour obtenir des données de capteur.

7. Appareil selon l'une quelconque des revendications 1 à 6,
dans lequel le dispositif de commande (120) comporte une unité de mémoire dans laquelle est stocké au moins un élément sélectionné parmi le plan de découpe, les données de capteur, la classification des complications liées au retrait, les classes de complications, l'au moins une étape de manipulation, au moins un paramètre de découpe, au moins un paramètre de retrait, au moins une stratégie de retrait, au moins un paramètre de tri et au moins une stratégie de tri ;
et/ou dans lequel le module de manipulation (126) et/ou le module de capteur (121) est conçu pour capturer des données sur les étapes de manipulation (SE) effectuées.

8. Appareil selon l'une quelconque des revendications 1 à 7,
dans lequel le dispositif de retrait (114) comporte au moins une unité de préhension (115), notamment au moins un bras de préhension magnétique, au moins un bras de préhension à ventouse ou au moins un bras de préhension à serrage ; et/ou
dans lequel l'unité de préhension (115) du dispositif de retrait est réglable angulairement et le module de retrait est conçu pour commander l'unité de préhension du dispositif de retrait sur la base des données de capteur afin d'ajuster un angle d'inclinaison d'une pièce (12) classée qui s'écarte du plan de découpe de manière compensatoire.

9. Procédé de découpe de pièces selon un plan de découpe à partir d'une pièce (10) et de retrait des pièces (12) découpées du reste de la pièce (14), par un appareil (100, 105) de découpe de pièces selon un plan de découpe à partir d'une pièce (10) et de retrait des pièces (12) découpées du reste de la pièce (14) selon l'une quelconque des revendications précédentes, comprenant les étapes suivantes :
- la détection des pièces (12) découpées dans le reste de la pièce (14) au moyen du dispositif de capteur (112), la fourniture de données de capteur sur les pièces (12) découpées détectées et la comparaison des données de capteur avec le plan de découpe (SA) ;
- l'identification des pièces (12) découpées avec au moins une complication liée au retrait sur la base des données de capteur (SB) ;
- le classement des pièces (12) identifiées selon une classification prédéterminée des complications liées au retrait comprenant au moins deux classes de complications (P0 ; P1 ; P2 ; P3 ; P4 ; P5 ; P6), dans lequel chaque pièce identifiée se voit attribuer au moins une classe de complications (P0 ; P1 ; P2 ; P3 ; P4 ; P5 ; P6) (SC) ;
- le retrait des pièces (12) découpées qui ne présentent aucune complication liée au retrait au moyen du dispositif de retrait (114) (SD) ; et
- la manipulation des pièces (12) classées avec au moins une complication liée au retrait selon au moins une étape de manipulation (SE) attribuée à la classe de complications (P0 ; P1 ; P2 ; P3 ; P4 ; P5 ; P6).

10. Procédé selon la revendication 9,
dans lequel l'étape d'identification (SB) comprend l'identification des pièces (12) découpées qui ne présentent aucune complication liée au retrait sur la base des données de capteur ; et/ou
dans lequel l'étape de classification (SC) comprend la classification des pièces (12) identifiées qui ne présentent aucune complication liée au retrait selon la classification prédéterminée des complications liées au retrait ; et/ou
dans lequel l'étape de retrait (SD) des pièces (12) découpées qui ne présentent aucune complication liée au retrait comprend le retrait des pièces classées qui ne présentent aucune complication liée au retrait.

11. Procédé selon l'une quelconque des revendications 9 et 10,
dans lequel la classification des complications liées au retrait comprend au moins une des classes de complications suivantes (P0 ; P1 ; P2 ; P3 ; P4 ; P5 ; P6) sélectionnées parmi :
- pièce (12) qui est incomplètement découpée (P1) ;
- pièce (12) qui adhère à un support de pièce (P2) ;
- pièce (12) qui est disposée à un angle d'inclinaison s'écartant du plan de découpe (P3) ;
- pièce (12) qui est disposée dans une position s'écartant du plan de découpe sur une trajectoire de collision de retrait vers le reste de la pièce (P4) ;
- pièce (12) qui est disposée dans une position s'écartant du plan de découpe au-delà ou à portée du dispositif de retrait (114) (P5) ;
- pièce (12) qui présente des déchets de pièce et/ou une contamination dans une zone de contact (18) de la pièce prévue pour le dispositif de retrait (114) (P6) ; et
- pièce (12) qui ne présente aucune complication liée au retrait (P0).

12. Procédé selon l'une quelconque des revendications 9 à 11,
dans lequel l'au moins une étape de manipulation (SE) est sélectionnée parmi
- le redécoupage d'une pièce (12) classée qui n'est pas entièrement découpée ;
- l'interdiction de retirer une pièce (12) classée qui n'est pas entièrement découpée et/ou qui adhère à un support de pièce (110), la sortie des informations sur les complications liées au retrait et/ou la planification de la découpe d'une pièce (12) correspondante ;
- le retrait d'une pièce (12) classée qui est disposée à un angle d'inclinaison s'écartant du plan de découpe au moyen du dispositif de retrait (114), dans lequel une unité de préhension (115), en particulier un bras de préhension, du dispositif de retrait est ajustée angulairement sur la base des données de capteur pour compenser l'angle d'inclinaison ;
- le retrait d'une pièce (12) classée qui est disposée dans une position s'écartant du plan de découpe sur une trajectoire de collision de retrait vers le reste de la pièce au moyen du dispositif de retrait (114), dans lequel le dispositif de retrait est commandé sur la base des données de capteur afin d'éviter la trajectoire de collision ;
- l'interdiction de retirer une pièce (12) classée qui est disposée dans une position s'écartant du plan de découpe au-delà du dispositif de retrait (114), la sortie d'informations sur les complications liées au retrait et/ou la planification de la découpe d'une pièce (12) correspondante ;
- la localisation d'une pièce (12) classée qui est disposée dans une position s'écartant du plan de découpe à portée du dispositif de retrait (114) et le retrait de la pièce (12) classée au moyen du dispositif de retrait ;
- la localisation d'un déchet de pièce et/ou d'une contamination (15) présents dans une zone de contact (18) d'une pièce (12) classée prévue pour le dispositif de retrait (114) sur la base des données de capteur, le retrait du déchet de pièce et/ou de la contamination (15) au moyen d'un dispositif de nettoyage (113) sur la base des données de capteur et le retrait de la pièce (12) classée au moyen du dispositif de retrait (114) ; et
- la localisation d'un déchet de pièce et/ou d'une contamination (15) présents dans une zone de contact (18) d'une pièce (12) classée prévue pour le dispositif de retrait (114) sur la base des données de capteur, l'entrée en contact avec la pièce (12) classée au moyen du dispositif de retrait en dehors de la zone de contact sur la base des données de capteur et le retrait de la pièce (12) classée au moyen du dispositif de retrait.

13. Procédé selon l'une quelconque des revendications 9 à 12,
dans lequel au moins une étape choisie parmi le retrait des pièces(12) découpées qui ne présentent pas de complication liée au retrait, la manipulation des pièces(12) classées présentant au moins une complication liée au retrait, le retrait des pièces (12) classées présentant au moins une complication liée au retrait et le retrait des pièces (12) classées qui ne présentent pas de complication liée au retrait, comprend un tri (SF0) des pièces, notamment un tri selon la similarité de forme ; et/ou dans lequel
la détection des pièces (12) dans le reste de la pièce (14) comprend la détection optique.

14. Procédé selon l'une quelconque des revendications 9 à 13,
dans lequel le dispositif capteur (112) est fixe ou mobile ; et/ou
dans lequel les données de capteur sont analysées pour déterminer les zones grises autour des côtés de la pièce (12) et/ou la complication liée au retrait est estimée à l'aide d'un réseau neuronal ; et/ou
dans lequel le dispositif capteur (112) comprend au moins un élément sélectionné parmi au moins un capteur optique (200, 300 ; 400) ; au moins une caméra qui est disposée dans au moins deux positions d'enregistrement différentes, ou au moins deux caméras qui sont disposées dans des positions différentes ; au moins une caméra TOF (200) avec laquelle sont obtenues des informations de profondeur concernant les pièces ; au moins une caméra à champ lumineux (300) avec laquelle sont obtenues des informations de profondeur concernant les pièces ; au moins un projecteur de motifs (400) ; au moins un système lidar ; et au moins un capteur ultrasonore avec lequel sont obtenues des données de capteur.

15. Produit programme d'ordinateur contenant un ou plusieurs modules de programme, qui amènent l'appareil selon l'une quelconque des revendications 1 à 8 à réaliser les étapes de procédé selon l'une quelconque des revendications 9 à 14, en particulier lorsque les modules de programme sont chargés dans une unité de mémoire de l'appareil.
